(19) Europäisches Patentamt
European Patent Office
Office européen des brevets

(11) **EP 2 761 450 B1**

(12) **EUROPEAN PATENT SPECIFICATION**

(45) Date of publication and mention of the grant of the patent:
**30.10.2019  Bulletin 2019/44**

(21) Application number: **12773168.5**

(22) Date of filing: **26.09.2012**

(51) Int Cl.:
*H04L 12/24* *(2006.01)*     *H04L 29/06* *(2006.01)*
*G06F 17/27* *(2006.01)*     *G06F 11/34* *(2006.01)*
*G06F 9/451* *(2018.01)*     *G06F 9/50* *(2006.01)*
*H04L 29/08* *(2006.01)*     *G06F 9/455* *(2018.01)*
*G06F 11/20* *(2006.01)*

(86) International application number:
**PCT/US2012/057370**

(87) International publication number:
**WO 2013/049233 (04.04.2013 Gazette 2013/14)**

(54) **SYSTEM AND METHOD FOR ACTIVE-PASSIVE ROUTING AND CONTROL OF TRAFFIC IN A TRAFFIC DIRECTOR ENVIRONMENT**

SYSTEM UND VERFAHREN FÜR AKTIV/PASSIVES ROUTING UND ZUR VERKEHRSSTEUERUNG IN EINER VERKEHRSLENKUNGSUMGEBUNG

SYSTÈME ET PROCÉDÉ POUR LE ROUTAGE ACTIF-PASSIF ET LA RÉGULATION DU TRAFIC DANS UN ENVIRONNEMENT CONTRÔLEUR DE TRAFIC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.09.2011  US 201161539886 P**
**27.09.2011  US 201161539900 P**
**31.08.2012  US 201213601087**
**31.08.2012  US 201213601428**
**31.08.2012  US 201213601530**
**31.08.2012  US 201213601632**
**24.09.2012  US 201213625716**

(43) Date of publication of application:
**06.08.2014  Bulletin 2014/32**

(73) Proprietor: **Oracle International Corporation**
**Redwood Shores, CA 94065 (US)**

(72) Inventors:
• **LEFTIK, Adam**
  **Alamo, California 94507 (US)**
• **HAYASHI, Hideaki**
  **Foster City, California 94404 (US)**
• **KUKREJA, Basant**
  **Santa Clara, California 95051 (US)**
• **XU, Zhong**
  **San Jose, California 95120 (US)**
• **SRINIVASAN, Arvind**
  **Bangalore 560 093 (IN)**

(74) Representative: **D Young & Co LLP**
**120 Holborn**
**London EC1N 2DY (GB)**

(56) References cited:
**GB-A- 2 360 369         US-A1- 2007 174 660**
**US-A1- 2007 226 359     US-A1- 2011 107 136**
**US-B1- 7 321 926**

**Description**

**Claim of Priority:**

This application claims the benefit of priority to U.S. Provisional Patent Application No. 61/539,886, titled "SYSTEMS AND METHODS FOR USE WITH AN APPLICATION SERVER TRAFFIC DIRECTOR (CORE FEATURES)", filed September 27, 2011; U.S. Provisional Patent Application No. 61/539,900, titled "SYSTEMS AND METHODS FOR USE WITH AN APPLICATION SERVER TRAFFIC DIRECTOR (ADMIN FEATURES)", filed September 27, 2011; U.S. Patent Application No. 13/601,087 titled "SYSTEM AND METHOD FOR PROVIDING ACTIVE-PASSIVE ROUTING IN A TRAFFIC DIRECTOR ENVIRONMENT", filed August 31, 2012; U.S. Patent Application No. 13/601,428, titled "SYSTEM AND METHOD FOR SURGE PROTECTION AND RATE ACCELERATION IN A TRAFFIC DIRECTOR ENVIRONMENT", filed August 31, 2012; U.S. Patent Application No. 13/601,530, titled "SYSTEM AND METHOD FOR DYNAMIC DISCOVERY OF ORIGIN SERVERS IN A TRAFFIC DIRECTOR ENVIRONMENT", filed August 31, 2012; U.S. Patent Application No. 13/601,632, titled "SYSTEM AND METHOD FOR PROVIDING FLEXIBILITY IN CONFIGURING HTTP LOAD BALANCING IN A TRAFFIC DIRECTOR ENVIRONMENT", filed August 31, 2012; and U.S. Patent Application No. 13/625,716, titled "SYSTEM AND METHOD FOR DYNAMIC CACHE DATA DECOMPRESSION IN A TRAFFIC DIRECTOR ENVIRONMENT", filed September 24, 2012;

**Field of Invention:**

The invention is generally related to a load balancer or traffic director, for use in an application server, middleware machine or other computing environment, and is particularly related to systems and methods for providing active-passive routing, surge protection and rate acceleration, dynamic discovery of origin servers, flexibility in configuring http load balancing, and/or dynamic cache data decompression in a traffic director or other environment.

**Background:**

A typical enterprise-level computing environment can include many different types of computing resources (e.g., web servers, application servers, database servers, or other types of resource servers) which are intended to be accessed over a network (e.g., a company's internal Ethernet network, or the Internet) by other computers, or by users operating various different types of computing devices. A familiar example is the use of a client computer, such as a laptop equipped with a web browser application, by which a user can access a web server via the Internet.
US 2007/0174660 A1 discloses system for enabling site failover in an application server or clustered environment, providing HTTP session state replication across servers within a cluster and the ability to replicate HTTP session state across multiple clusters. US 2007/0226359 A1 discloses a system for high availability clustering that includes a cluster server having a variety of resources and interfaces, including a cluster application program interface, group services, failure management, resource management, membership services, communications, a heartbeat interface, cluster database and management, a JNDI interface, and a resource API interface.
Today's organizations rely increasingly on their computing resources being readily available from almost any location, at all times, with a high level of performance. The task of ensuring that such resources are allocated efficiently often requires the use of a load balancing device to distribute requests from clients to target resources, in a fair manner according to its distribution policies. These are the types of environments that embodiments of the invention can be used with.

**Summary:**

Described herein are systems and methods for use with a load balancer or traffic director, and administration thereof. In accordance with an embodiment, the traffic director, referred to herein in some embodiments as "Oracle Traffic Director" (OTD), is provided as a software-based load balancer that can be used to deliver a fast, reliable, scalable, and secure platform for load-balancing Internet and other traffic to back-end origin servers, such as web servers, application servers, or other resource servers.
Embodiments of the traffic director are particularly useful in application server, middleware machine, and similar high-performance enterprise-level computing environments, such as Oracle WebLogic and Exalogic environments.
In accordance with an embodiment, the system comprises a traffic director having one or more traffic director instances, which is configured to receive and communicate requests, from clients, to origin servers having one or more pools of servers. In accordance with an embodiment, the system comprises a high-speed network infrastructure which provides communication protocols or sockets for use by the origin servers in receiving requests; one or more protocol terminator/emulators for use with the communication protocols or sockets; and an inbound socket configuration and an outbound socket configuration which together indicate which terminator/emulator the traffic director should use in communicating requests to particular ones of the origin servers.

In accordance with an embodiment, a pool of origin servers is configured so that at least one or more of the servers within the pool are assigned as primary servers, and at least one or more others of the servers within the pool are assigned as backup servers. The traffic director is configured so that it determines the availability of primary servers in the pool, and directs requests only to the primary servers while the pool includes a sufficient number of available primary servers.

In accordance with an embodiment, a traffic monitor, at the traffic director, monitors traffic, including the number of connections, between the traffic director instances and one or more of the resource servers within the origin servers. The traffic director can set a traffic rate which controls the traffic, including the number of connections, to provide surge protection, or rate acceleration/deceleration.

In accordance with an embodiment, a health check subsystem periodically checks the health of its configured resource servers, and also attempts to detect changes in the one or more pools, by sending requests to any new server instances configured as origin servers within the pool, receiving appropriate responses, and updating the configuration accordingly.

In accordance with an embodiment, the system comprises a high-speed network infrastructure which provides communication protocols or sockets for use by the origin servers in receiving requests; one or more protocol terminator/emulators for use with the communication protocols or sockets; and an inbound socket configuration and an outbound socket configuration which together indicate which terminator/emulator the traffic director should use in communicating requests to particular ones of the origin servers.

In accordance with an embodiment, the traffic director can be configured to compress data stored in its cache, and to respond to requests from clients by serving content from origin servers either as compressed data, or by dynamically decompressing the data before serving it, should a particular client prefer to receive a non-compressed variant of the data. In accordance with an embodiment, the traffic director can be configured to make use of hardware-assisted compression primitives, to further improve the performance of its data compression and decompression.

The subject-matter for which protection is sought is defined by the appended claims.

### Brief Description of the Figures:

**Figure 1** illustrates a computing environment which includes a load balancer or traffic director, in accordance with an embodiment.

**Figure 2** illustrates the use of a traffic director with one or more pools or origin servers, in accordance with an embodiment.

**Figure 3** illustrates a traffic director architecture, in accordance with an embodiment.

**Figure 4** illustrates a traffic director administration environment and interface, in accordance with an embodiment.

**Figure 5** illustrates the use of active/passive routing in a traffic director, in accordance with an embodiment.

**Figure 6** further illustrates the use of active/passive routing in a traffic director, in accordance with an embodiment.

**Figure 7** is a flowchart of a method for providing active/passive routing in a traffic director, in accordance with an embodiment.

**Figure 8** illustrates the use of surge protection in a traffic director, in accordance with an embodiment.

**Figure 9** illustrates the use of rate acceleration in a traffic director, in accordance with an embodiment.

**Figure 10** is a flowchart of a method for providing surge protection in a traffic director, in accordance with an embodiment.

**Figure 11** is a flowchart of a method for providing rate acceleration in a traffic director, in accordance with an embodiment.

**Figure 12** illustrates dynamic discovery of origin servers in a traffic director, in accordance with an embodiment.

**Figure 13** further illustrates dynamic discovery of origin servers in a traffic director, in accordance with an embodiment.

**Figure 14** is a flowchart of a method for providing dynamic discovery of origin servers in a traffic director, in accordance with an embodiment.

**Figure 15** is a flowchart of another method for providing dynamic discovery of origin servers in a traffic director, in accordance with an embodiment.

**Figure 16** illustrates the use of a traffic director, in accordance with an embodiment.

**Figure 17** is a flowchart of a method for using a traffic director, in accordance with an embodiment.

**Figure 18** illustrates the use of dynamic HTTP decompression in a traffic director environment, in accordance with an embodiment.

**Figure 19** is a flowchart of a method for providing dynamic HTTP decompression in a traffic director environment, in accordance with an embodiment.

**Figure 20** illustrates support for hardware primitives, for use with dynamic HTTP decompression in a traffic director environment, in accordance with an embodiment.

## Detailed Description:

As described above, today's organizations rely increasingly on their computing resources being readily available from almost any location, at all times, with a high level of performance. The task of ensuring that such resources are allocated efficiently often requires the use of a load balancing device to distribute requests from clients to target resources, in a fair manner according to its distribution policies.

Described herein are systems and methods for use with a load balancer or traffic director, and administration thereof. In accordance with an embodiment, the traffic director, referred to herein in some embodiments as "Oracle Traffic Director" (OTD), is provided as a software-based load balancer that can be used to deliver a fast, reliable, scalable, and secure platform for load-balancing Internet and other traffic to back-end origin servers, such as web servers, application servers, or other resource servers.

Embodiments of the traffic director are particularly useful in application server, middleware machine, and similar high-performance enterprise-level computing environments, such as Oracle WebLogic and Exalogic environments.

In accordance with an embodiment, the traffic director serves as an entry point for traffic such as hypertext transfer protocol (HTTP) and hypertext transfer protocol secure (HTTPS) requests, which are received from clients or client devices, for communication to a back-end of resources or resource servers acting as origin servers. Each traffic director includes one or more traffic director instances defined by a configuration, wherein the configuration provides information about various elements of that instance, such as listeners, origin servers, failover groups, and logs.

Examples of the types of clients that can be used with the system include computer servers, laptop computers, portable devices such as smartphones, and other types of computing devices, some of which may include, e.g., a web browser application for accessing a web server.

Examples of the types of resources that can be used as origin servers include lightweight directory access protocol (LDAP) servers, web servers, multimedia servers, application servers, database servers, and other types of resources.

In accordance with an embodiment, the traffic director can perform tasks such as distributing requests to origin servers based on one or more load-balancing methods; routing requests based on specified rules; caching frequently accessed data; prioritize traffic; and controlling the quality of service.

From a performance perspective, in accordance with an embodiment, the traffic director can include an architecture that enables it to handle large volumes of traffic with low latency. For example, embodiments can be optimized for use within a high-performance computing environment such as, e.g., Oracle Exalogic Elastic Cloud, or to communicate with origin servers at the back-end using a high performance communication fabric such as, e.g., InfiniBand. In accordance with an embodiment, to support high availability, the traffic director can recognize failover groups of traffic director instances that provide active-passive or active-active failover. As the volume of traffic to a network increases, the traffic director environment can be scaled by reconfiguring the traffic director with additional back-end servers to which it can route requests, or by modifying the rate at which traffic is communicated.

From an administration perspective, in accordance with an embodiment, the traffic director is designed to be easy to install, configure, and use; and can include a simple, wizard-driven graphical interface, as well as a robust command-line interface, for use by an administrator in managing traffic director instances. For any particular organization, depending on their business requirements, such as the number of back-end applications for which they want to use the traffic director to balance requests, their internal requirements such as security, and the traffic director features they wish to use, the traffic director topology can be varied to address their needs. For example, a simple traffic director topology might initially utilize a single traffic director instance running on a dedicated compute node and distributing client requests to a pool of servers at the back-end. To avoid a single point of failure, an administrator can configure two homogenous traffic director instances running on different nodes and forming an active-passive failover pair. To improve resource utilization, an administrator can configure the two traffic director instances in active-active mode with two virtual IP addresses.

### Glossary

In accordance with an embodiment, the following terms are used herein. It will be evident that, in accordance with other embodiments, additional and/or different terms can be used.

**Configuration:** A collection of configurable elements (e.g., metadata) that determines the runtime behavior of a traffic director instance. In accordance with an embodiment, a typical configuration contains definitions for listeners (e.g., IP address and port combinations) on which the traffic director should listen for requests, together with information about servers at the back-end to which the requests should be sent. The traffic director can read the configuration when a traffic director instance starts, and while processing client requests.

**Instance (Traffic Director Instance):** A traffic director server that is instantiated from a configuration and deployed on an administration node or the administration server.

**Cluster:** A collection of two or more traffic director instances that are created from the same configuration.

**Failover Group:** Two or more traffic director instances grouped by a virtual IP address (VIP). In accordance with an embodiment, a failover group provides high availability in active-passive mode; wherein requests are received at the VIP and routed to the instance that is designated as the primary instance; if the primary instance is not reachable, requests are routed to the backup instance. In accordance with an embodiment, for active-active failover, two failover groups are required, each with a unique VIP, but both comprising the same nodes with the primary and backup roles reversed; each instance in the failover group is designated as the primary instance for one VIP, and the backup for the other VIP.

**Administration Server:** A specially configured traffic director instance that hosts the interfaces, including administration console and command-line interface, through which an administrator can create traffic director configurations, deploy them as instances on administration nodes, and manage the instances.

**Administration Node:** A physical server that is designated as a host on which the administrator can deploy traffic director instances. In accordance with an embodiment, on a given node, the administrator can deploy only one instance of a configuration.

**INSTANCE_HOME:** A directory of the administrator's choice, on the administration server or an administration node, in which the configuration data and binary files pertaining to traffic director instances are stored.

**ORACLE_HOME:** A directory of the administrator's choice in which the administrator installs the traffic director binaries.

**Administration Console:** A web-based graphical interface on the administration server that the administrator can use to create, deploy, and manage traffic director instances.

**Client:** In accordance with an embodiment, an agent (e.g., a web browser or an application) that sends requests (e.g., HTTP and HTTPS requests) to traffic director instances. Examples of the types of clients that can be used with the system include computer servers, laptop computers, portable devices such as smartphones, and other types of computing devices, some of which may include, e.g., a web browser application for accessing a web server.

**Origin Server:** In accordance with an embodiment, a resource or server at the back-end, to which the traffic director forwards the requests that it receives from clients, and from which it receives responses to client requests. Examples of the types of resources that can be used as origin servers include lightweight directory access protocol (LDAP) servers, web servers, multimedia servers, application servers, database servers, and other types of resources.

**Origin-server Pool:** A collection of origin servers that host the same application or service, and that the administrator can load-balance by using the traffic director. In accordance with an embodiment, the traffic director distributes client requests to servers in the origin-server pool based on the load-distribution method(s) that are specified for that pool.

**Virtual Server:** A virtual entity within a traffic director server instance that provides a unique IP address (or host name) and port combination, through which the traffic director can serve requests for one or more domains. In accordance with an embodiment, a traffic director instance on a node can contain multiple virtual servers. The administrator can configure settings such as the maximum number of incoming connections specifically for each virtual server, and can also customize how each virtual server handles requests.

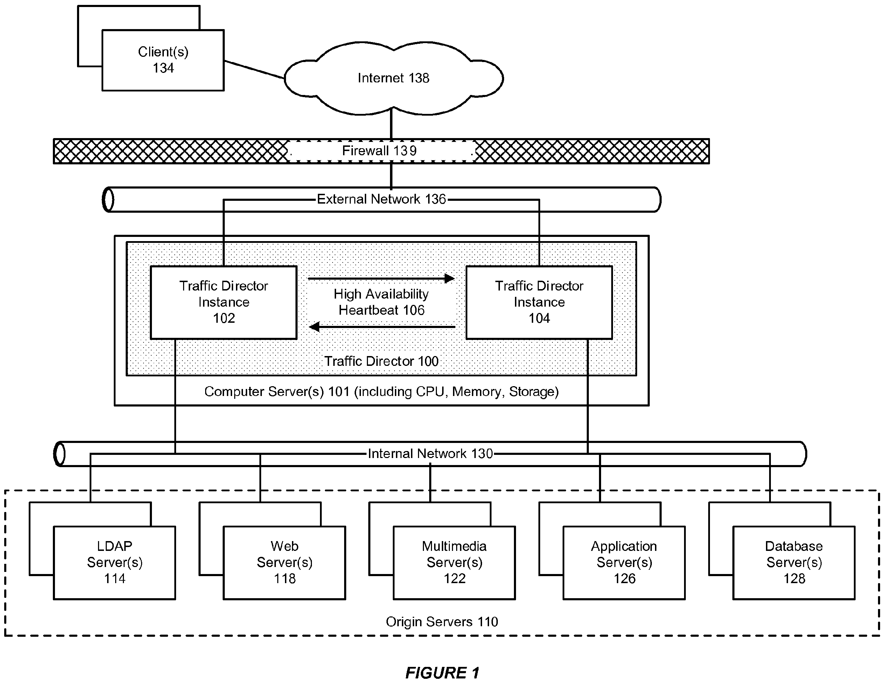

**Figure 1** illustrates a computing environment which includes a load balancer or traffic director, in accordance with an embodiment. As shown in Figure 1, in accordance with an embodiment, the traffic director 100 (referred to herein in some embodiments as Oracle Traffic Director (OTD)) can be deployed on one or more physical computer servers 101 (or similar computing devices that include a processor (CPU), memory, and storage), and can include one or more traffic director instances 102, 104, which in turn can communicate with one another using a high-availability heartbeat or similar means 106.

For any particular organization, depending on their business requirements, such as the number of back-end applications for which they want to use the traffic director to balance requests, their internal requirements such as security, and the traffic director features they wish to use, the traffic director topology can be varied to address their needs. The back-end can include one or more origin servers 110, examples of which can include LDAP servers 114, web servers 118, multimedia servers 122, application servers 126, and database servers 128. In accordance with an embodiment, the application server can be a WebLogic server (WLS). Other types of origin servers, and application servers, can be used, depending on the particular needs of the organization. Each of the origin servers can communicate with one another, and with the traffic director, via an internal network 130 such as an Ethernet network.

In accordance with an embodiment, the traffic director can receive requests from clients 134, via an external network 136, the Internet 138, and in the case of many organizations a firewall 139. Examples of the types of clients that can be used with the system include computer servers, laptop computers, portable devices such as smartphones, and other types of computing devices, some of which may include, e.g., a web browser application for accessing a web server.

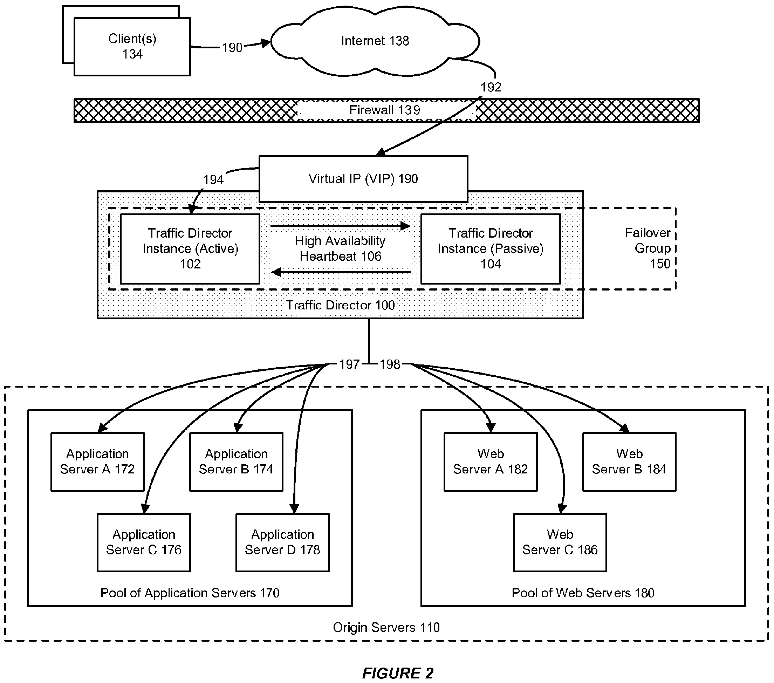

**Figure 2** illustrates the use of a traffic director with one or more pools or origin servers, in accordance with an embodiment. In the example illustrated in Figure 2, the traffic director is used with two pools, including a (first) pool of application servers 170, having four application servers, here indicated as A 172, B 174, C 176, D 178; and a (second) pool of web servers 180, having three web servers, here indicated as A 182, B 184, C1 86. In accordance with other embodiments and examples, other types and numbers of pools and servers can be used, depending on the particular needs of the organization.

In the example illustrated in Figure 2, the topology comprises two traffic director instances (102 and 104) forming an active-passive failover group 150, and including a single virtual IP address 190 for receipt of client requests. When the active instance (in this example instance 102) receives a request 190, 192, 194, it determines the server pool to which the request should be sent, and forwards the request 197, 198 to one of the servers in that pool, based on the load-distribution method(s) that are specified for that pool.

Although the example shown in Figure 2 illustrates the use of two server pools at the back-end, an administrator can configure the traffic director to route requests to servers in multiple pools. In the active-passive setup illustrated in Figure 2, one node in the failover group is redundant at any point in time. In accordance with an embodiment, to improve resource utilization, the administrator can configure the two traffic director instances in active-active mode with two virtual IP addresses; in this scenario each instance caters to requests received on one virtual IP address, and backs up the other instance.

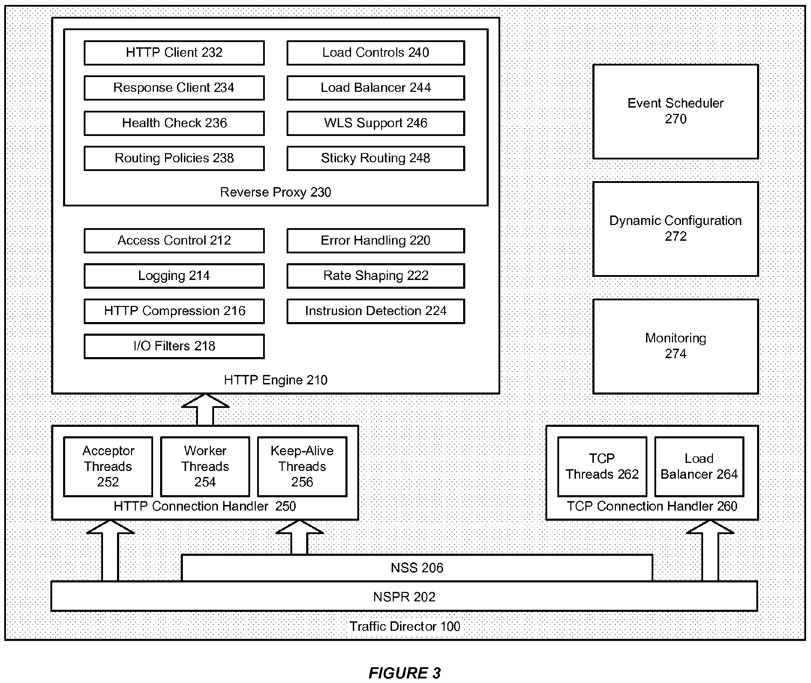

**Figure 3** illustrates a traffic director architecture, in accordance with an embodiment. In accordance with an embodiment, the traffic director can include an architecture that enables it to handle large volumes of traffic with low latency. Embodiments can also be optimized for use within a high-performance computing environment, or to communicate with origin servers at the back-end using a high performance communication fabric.

As shown in Figure 3, in accordance with an embodiment, the traffic director can include one or more Netscape portable runtime (NSPR) 202 and Network Security Services (NSS) 206 layers. In accordance with an embodiment, the traffic director can also include an HTTP engine 210 having one or more access control 212, logging 214, HTTP compression 216, I/O filter 218, error handling 220, rate shaping 222, intrusion detection 224, or other components; and a reverse proxy component 230 having one or more http client 232, response client 234, health check 236, routing policies 238, load controls 240, load balancer 244, WLS support 246, sticky routing 248, or other components. In accordance with an embodiment, the traffic director can also include an HTTP connection handler 250 having one or more acceptor threads 252, worker threads 254, keep-alive threads 256, or other components. In accordance with an embodiment, the traffic director can also include a TCP connection handler 260 having one or more TCP threads 262, load balancer 264, or other components. In accordance with an embodiment, the traffic director can also include one or more evens schedule 270, dynamic configuration 272, monitoring 274, or other components.

It will be evident that, in accordance with other embodiments, additional and/or different components can be used.

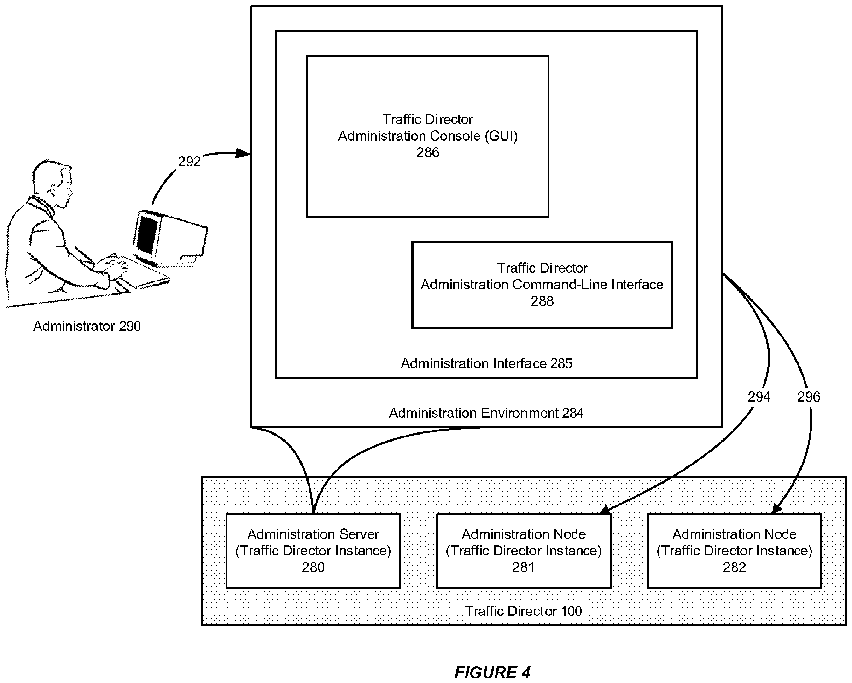

**Figure 4** illustrates a traffic director administration environment and interface, in accordance with an embodiment. From an administration perspective, the traffic director is designed to be easy to install, configure, and use; and can include a simple, wizard-driven graphical interface, as well as a robust command-line interface, for use by an administrator in managing traffic director instances. As shown in Figure 4, in accordance with an embodiment, the traffic director can include one or more traffic director instances 280, 281, 282, wherein at least one of the instances is designated an administration server (280), while other instances are designated as administration nodes (281, 282).

In accordance with an embodiment, an administration environment 284 includes an administration interface 285, which in turn includes one or more of an administration console (GUI) 286 and/or a command line interface 288, that enables an administrator 290 to configure or otherwise administer 292 the traffic director, or its instances 294, 296.

**Active-Passive Routing**

In some active/passive routing methodologies, a load balancer maintains a first cluster of servers as a primary (i.e. an active) cluster, and another cluster of servers as a backup (i.e. a passive) cluster. This is useful in disaster recovery situations whereby, when the primary data center is down, the traffic is routed to the backup data center automatically. In accordance with an embodiment, the traffic director takes a nuanced approach, whereby the traffic director picks up backup nodes only after all of the active nodes are down.

In accordance with an embodiment, within a server pool, some of the origin servers can be specified as primary servers, while others are specified as backup servers. The traffic director will only route requests to non-backup servers (i.e., to primary servers) if at least one primary server is available. However, if no primary server is available, then the traffic director will route the requests to the backup servers in the pool. Once any primary server becomes available again, the traffic director will stop sending requests to the backup servers, and will route subsequent requests to the primary server(s).

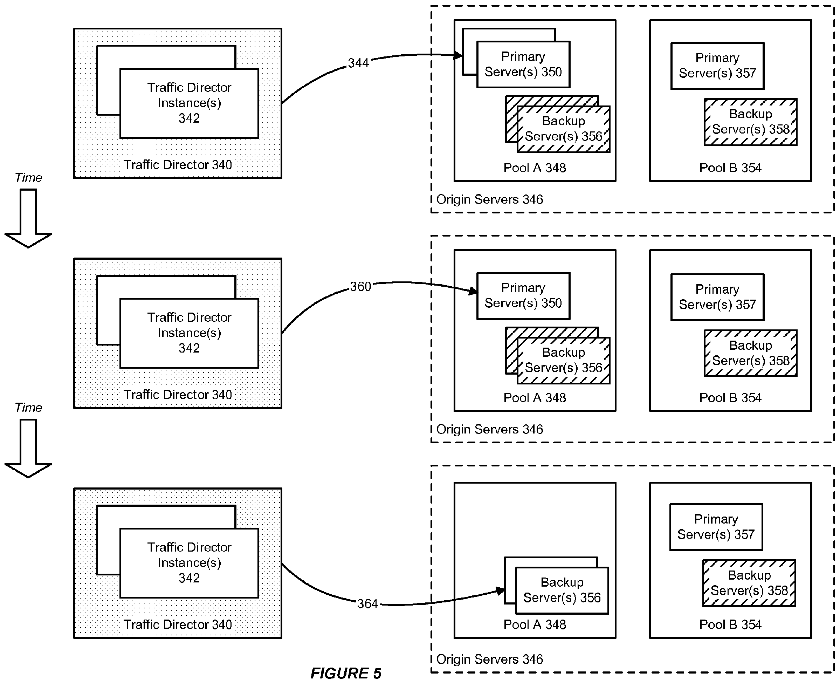

**Figure 5** illustrates the use of active/passive routing in a traffic director, in accordance with an embodiment. As shown in Figure 5, an active/passive environment can include a traffic director 340, having one or more traffic director instances 342, for use in routing requests to origin servers 346. The origin servers can be configured as one or more pools of servers (here shown as Pool A 348, and Pool B 354), each pool having one or more primary servers 350, 357, and one or more backup servers 356, 358.

As illustrated in Figure 5, the traffic director can be configured so that, for any particular pool (e.g., Pool A), originally the traffic director will only route requests 344 to the non-backup servers (i.e., primary servers) if at least one primary server is available in that pool, and will not route requests to the backup servers (which are shaded here for illustration).

In accordance with an embodiment, after a period of time, although one or more primary servers may become unavailable, perhaps due to failure, the traffic director will continue to only route requests 360 to the primary server(s) in that pool, if at least one primary server is available.

After another period of time, in accordance with an embodiment, if all of the primary servers in the pool become unavailable, then the traffic director will instead route requests 364 to the backup servers in the pool.

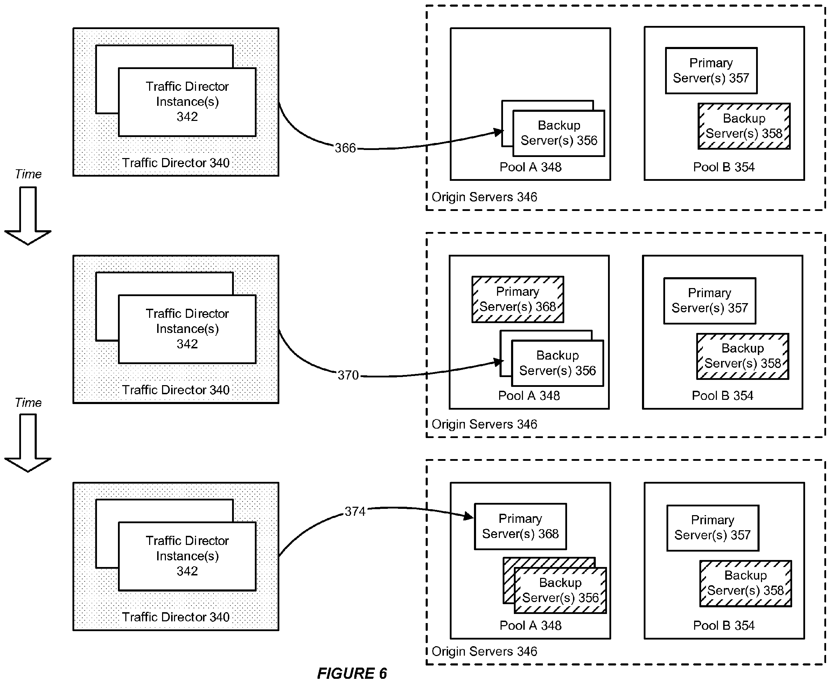

**Figure 6** further illustrates the use of active/passive routing in a traffic director, in accordance with an embodiment. As shown in Figure 6, if all of the primary servers in the pool are still unavailable, then the traffic director will continue to route requests 366 to the backup servers in the pool.

When a primary server is made available again 368, depending on the configuration, the traffic server may delay for a period of time before beginning to forward traffic to the (new or otherwise now available) primary server. In this case, the traffic director will continue 370 to route requests to the backup servers for a period of time, and will not yet route requests to the primary servers (which are shaded here for illustration).

Subsequently, once at least one primary server is fully available again, the traffic director will again only route requests 374 to non-backup servers (i.e., primary servers) if at least one primary server is available, and will not route requests to backup servers.

In accordance with an embodiment, in the case that sticky routing is configured, if a primary server becomes unavailable, then all subsequent requests sticky to the server will not be rejected, but will be routed to other primary servers or backup servers if no primary server is available. Since transition origin servers may not have session information stored for sticky requests, the sessions will probably fail in this case. However, a new serving server may challenge the sender and establish new sessions for those sticky requests. The backup server will be used for routing only when all the primary servers are not available.

In accordance with an embodiment, to configure active/passive routing for use with the traffic director, an element called "backup-server" can be added in the element <origin-server> in a server.xml file for specifying backup servers, parameters and examples of which are provided in Table 1, and Listing 1 respectively.

Table 1

| Element | Occurrences | Description | Value |
|---|---|---|---|
| backup-server | 0 or 1 | The parameter specifies if the origin server is a backup server | True or False. By default, False. |

```
<server>
......
<reverse-proxy>
<server-pool>
<name>mypool2</name>
<load-distribution>weighted-round-robin</load-distribution>
        <origin-server>
                <host>server1</host>
                <port>80</port>
                <protocol>HTTP</protocol>
                <weight>10</weight>
                <backup-server>true</backup-server>
                <max-connections>50</max-connections>
                <ramp-up-time>600</ramp-up-time>
                </origin-server>
        <origin-server>
                <host>server2</host>
                <port>80</port>
                <protocol>HTTP</protocol>
                <weight>20</weight>
                <backup-server>false</backup-server>
                <max-connections>100</max-connections>
                <ramp-up-time>300</ramp-up-time>
                </origin-server>
        </server-pool>
        ......

                </reverse-proxy>
                ......
                </server>
```

## Listing 1

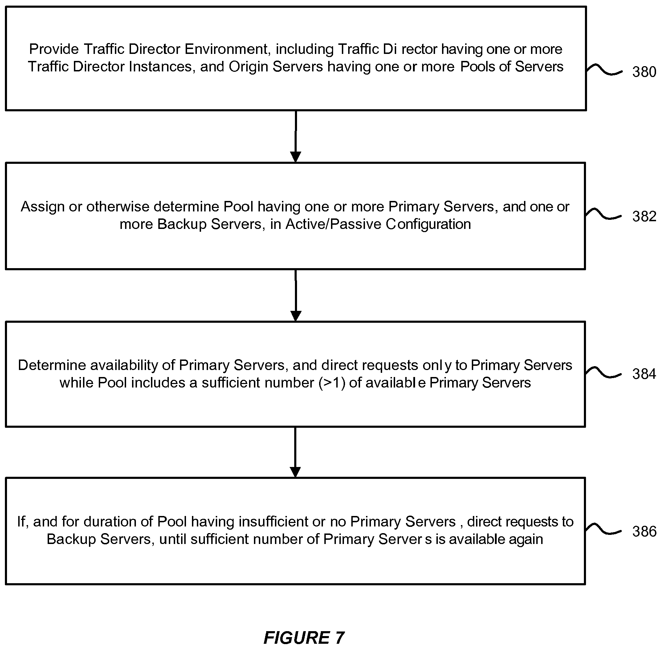

**Figure 7** is a flowchart of a method for providing active/passive routing in a traffic director, in accordance with an embodiment. As shown in Figure 7, at step 380, a traffic director environment is provided, including a traffic director having one or more traffic director instances, and origin servers having one or more pools of servers. At step 382, one or more primary servers and one or more backup servers are assigned to a pool, in an active/passive configuration. At step 384, the traffic director determines the availability of primary servers in the pool, and directs requests only to the primary servers while the pool includes a sufficient number of available primary servers. In accordance with an embodiment, the traffic director will only route requests to non-backup servers (i.e., primary servers) if at least one primary server is available. At step 386, if there is an insufficient number of primary servers in the pool (which in accordance with an embodiment is less than one, i.e., no primary servers), then the traffic director will direct requests to backup servers in the pool, until the number of primary servers becomes available again. At that point, depending on the configuration the traffic director can again directs requests only to the primary servers while the pool includes a sufficient number of servers.

## Surge Protection

Load balancers can help prevent server outages that would be otherwise caused by an unanticipated surge of traffic to, e.g., an origin server. In accordance with an embodiment, the traffic director provides an intelligent form of surge protection, by monitoring traffic to the origin servers and queuing connections as necessary, so that the traffic does not exceed certain surge limits.

In accordance with an embodiment, when surge protection is enabled, the traffic director will not open more concurrent connections to a server than a configured capacity. This limit or maximum capacity can be specified by an element <max-connections>. If an origin server reaches its maximum connection capacity, then no requests requiring new connections will be routed to this server until some of its existing connections have been released. If all origin servers have reached their connection capacities, then subsequent requests that need new connections will be rejected, and error messages sent.

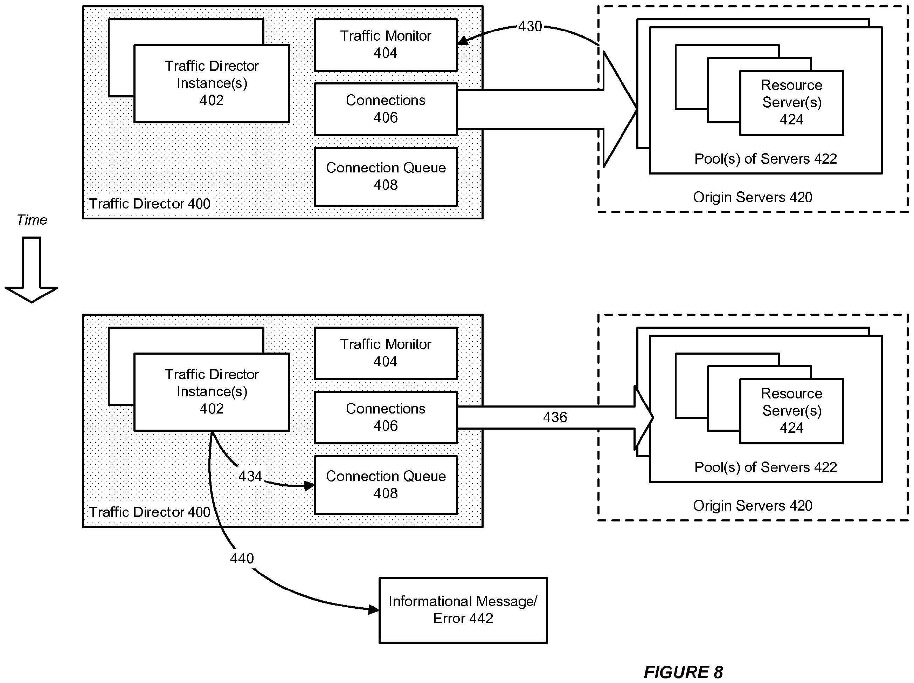

**Figure 8** illustrates the use of surge protection in a traffic director, in accordance with an embodiment. As shown in Figure 8, a traffic director environment is provided, including a traffic director 400 having one or more traffic director instances 402, and origin servers 420 having one or more pools of servers 422. Each pool of servers can include one or more resource servers 424.

In accordance with an embodiment, the traffic director includes a traffic monitor 404, which enables the traffic director to monitor traffic, including the number of connections 406, between the traffic director instances and one or more of the resource servers within the origin servers. In accordance with an embodiment, the traffic director also includes a connection queue 408, which can be used to queue connections.

During operation, while requests from clients are being communicated to the origin servers, the traffic monitor receives feedback 430 describing traffic, including the number of connections between the traffic director and the resource servers. If the traffic monitor determines that the traffic, including the number of connections, between the traffic director and a particular resource server exceeds a maximum amount allowed for that resource server, then the traffic director can temporarily direct subsequent traffic and connections away from the resource server and to the connection queue 434, which has the effect of temporarily reducing or limiting 436 the amount of traffic flowing to that resource server.

In accordance with an embodiment, the traffic director can optionally provide 440 an informational message 442, e.g., to a log file or to an administrator, to inform them of the traffic surge, and the action taken. The traffic monitor can continue to monitor traffic/connections to the origin servers, for subsequent adjustment to the connection queue as necessary.

## Rate Shaping (Acceleration/Deceleration)

In accordance with an embodiment, the traffic director also supports request rate acceleration, which allows graceful addition of a server to origin server pools, by gradually accelerating traffic to newly added servers, as opposed to overwhelming those servers with a massive amount of traffic. Request rate acceleration is adaptive, inasmuch as it can incorporate a number of dynamically monitored parameters, such as number of active connections or current load, maximum number of connections or the capacity of the origin servers. The feature can also be extended to provide request-rate deceleration, whereby the traffic director can effectively ramp down traffic directed at an origin server, so that an administrator can take it offline when its traffic is completely quiesced, e.g., for scheduled maintenance purposes. Together, both rate acceleration and deceleration can be used to shape the rate of traffic to the origin servers.

In accordance with an embodiment, when an origin server comes online, the traffic director will not send requests to the server at its full capacity immediately, but will instead gradually increase the sending rate over a period of time. This can provide several benefits: for example, when an origin server is starting up, it will need a certain period of time to load data and allocate various resources; during this warm-up process, the origin server's response time may be slow, and sending a large number of requests to the server will make the server performance even worse and may cause unexpected behaviors of the server. Additionally, if an origin server is problematic, it may fail in responding to some or most of the requests, and its status may change frequently between "UP" and "DOWN" status; for such a server, it is better not to send many requests to it at the beginning of its "UP" status. Furthermore, if a load balancing algorithm such as least connection count is used, the traffic director may send many requests to a new server and may flood the server at beginning time, because a new server's connection count would be zero; rate accelerating can alleviate this problem.

In accordance with an embodiment, the traffic director will gradually increase the traffic rate to a new server until the rate reaches the server's configured maximum rate (max-connections). Rate accelerating can be achieved via connection capacity adjustment, and the adjustment of capacity can be either time based (i.e., increasing the connection capacity by a fixed value per unit time.) or window-based (i.e., increasing the connection capacity by a value after it receives a certain number of responses.

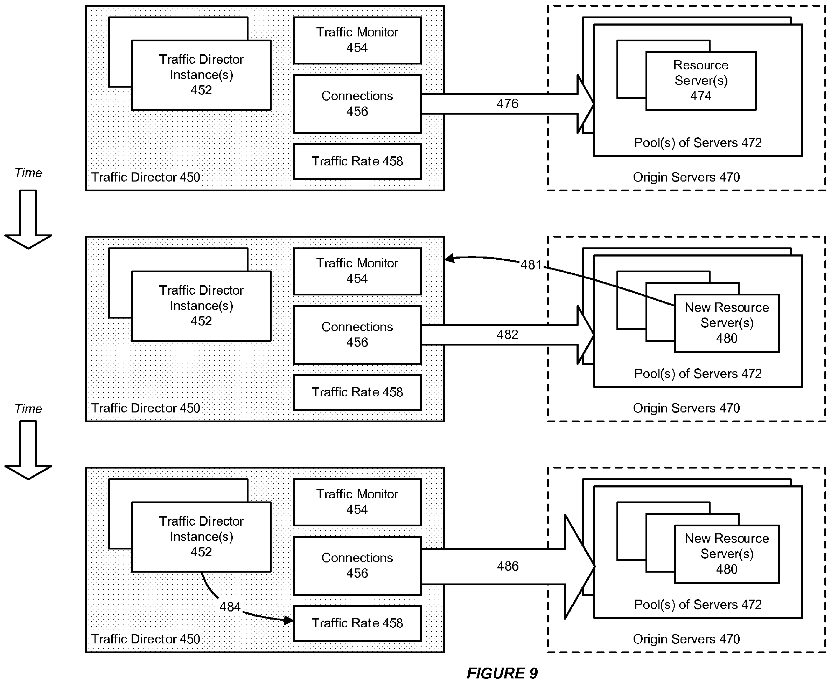

**Figure 9** illustrates the use of rate acceleration in a traffic director, in accordance with an embodiment. As shown in Figure 9, a traffic director environment is again provided, including a traffic director 450 having one or more traffic director instances 452, and origin servers 470 having one or more pools of servers 472. Each pool of servers can include one or more (existing) resource servers 474. The traffic director again includes a traffic monitor 454, which enables the traffic director to monitor traffic, including the number of connections 456, between the traffic director instances and one or more of the resource servers within the origin servers.

In accordance with an embodiment, the traffic director can set a traffic rate 458 which initially controls the traffic, including the number of connections 476, between the traffic director instances and one or more (existing) resource servers within the origin servers.

Subsequently, if the traffic monitor determines the presence 481 of additional (new) resource servers 480 within the origin servers, to which the traffic director can direct traffic, the traffic monitor can wait for a period of time, in some instances maintaining the traffic at its initial rate 482, before gradually shaping or adjusting the traffic rate 484 to direct traffic/connections between the traffic director instances and those new resource servers 486.

Request rate shaping (acceleration/deceleration) differs from the surge protection features described earlier - although both mechanisms can be used to limit request traffic, they are based on different criteria; in particular, rate shaping takes limiting actions based on request properties, while surge protection is primarily based on the amount of concurrent connections to origin servers.

In accordance with an embodiment, a time-based method for the connection capacity adjustment, and a configuration parameter called "ramp-up-time" can be used, which specifies how long traffic director takes to ramp the sending rate up to the server's configured capacity:

$$\text{Adjusted-Connection-Capacity} = MAX\{(\text{max-connections} * MIN\{1, \text{server-up-time/ramp-up-time}\}), 1\}$$

When request rate acceleration is enabled, the adjusted capacity instead of the configured hard limit (max connections) can be used by the traffic director to make routing decisions. As described above, if all the servers have reached their adjusted connection capacities, then new requests will be rejected.

In accordance with an embodiment, to configure surge protection and request rate acceleration for use with the traffic director, the elements called "max-connections" and "ramp-up-time" can be added in the element <origin-server> in a server.xml file for the desired resource server, parameters and examples of which are provided in Table 2, and Listing 2 respectively.

Table 2

| Element | Occurrences | Description | Value |
|---|---|---|---|
| max-connections | 0 or 1 | The maximum number of concurrent connections to a server. Users must configure max-connections with a positive value, if they want to enable the features Request Rate Accelerating and Surge Protection. If value 0 is specified, the Request Rate Accelerating and Origin Server Surge Protection will be disabled for the server. | 0 or positive integer. The maximum allowable value is 20480 and the default value is 0 (no limit). |
| ramp-up-time | 0 or 1 | The time in seconds that Denali takes to ramp the sending rate up to the capacity of a newly up origin server. If the parameter is not specified, request rate accelerating will not be activated for the server. | Positive integer. |

```
<server>
......
<reverse-proxy>
<server-pool>
<name>serverpool1</name>
```

```
<load-distribution>weighted-round-robin</load-distribution>
        <origin-server>
                <host>server1</host>
                <port>80</port>
                <protocol>HTTP</protocol>
                <weight>10</weight>
                <max-connections>50</max-connections>
                <ramp-up-time>600</ramp-up-time>
        </origin-server>
        <origin-server>
                <host>server2</host>
                <port>80</port>
                <protocol>HTTP</protocol>
                <weight>20</weight>
                <max-connections>100</max-connections>
                <ramp-up-time>300</ramp-up-time>
        </origin-server>
    </server-pool>
    ......
</reverse-proxy>
......
</server>
```

Listing 2

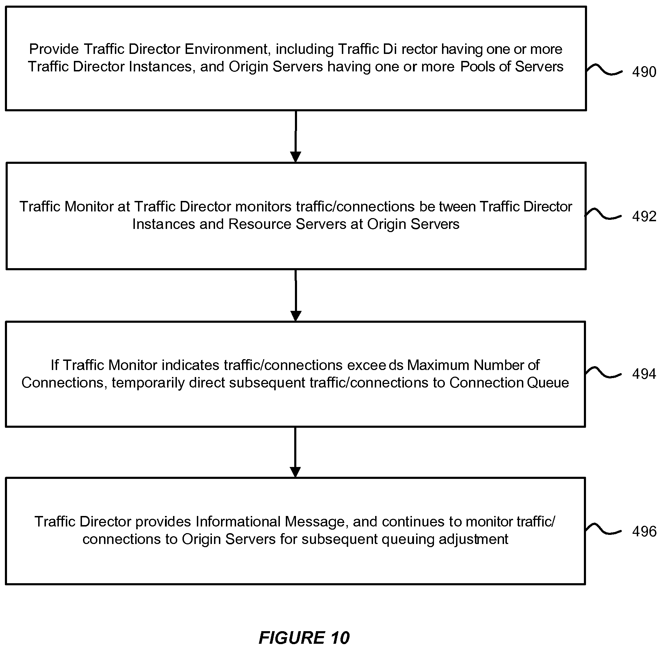

**Figure 10** is a flowchart of a method for providing surge protection in a traffic director, in accordance with an embodiment. As shown in Figure 10, at step 490, a traffic director environment is provided, including a traffic director having one or more traffic director instances, and origin servers having one or more pools of servers. At step 492, a traffic monitor at the traffic director monitors traffic, including the number of connections, between the traffic director instances and one or more resource servers within the origin servers. At step 494, if the traffic monitor determines that the traffic, including the number of connections, between the traffic director and a particular resource server exceeds a maximum amount allowed for that resource server, then the traffic director will temporarily direct subsequent traffic and connections away from the resource server and to a connection queue. At step 496, the traffic director can optionally provide an informational message, e.g., to a log file or to an administrator to inform of the traffic surge, and will continue to monitor traffic/connections to the origin servers, for subsequent adjustment to the connection queue as necessary.

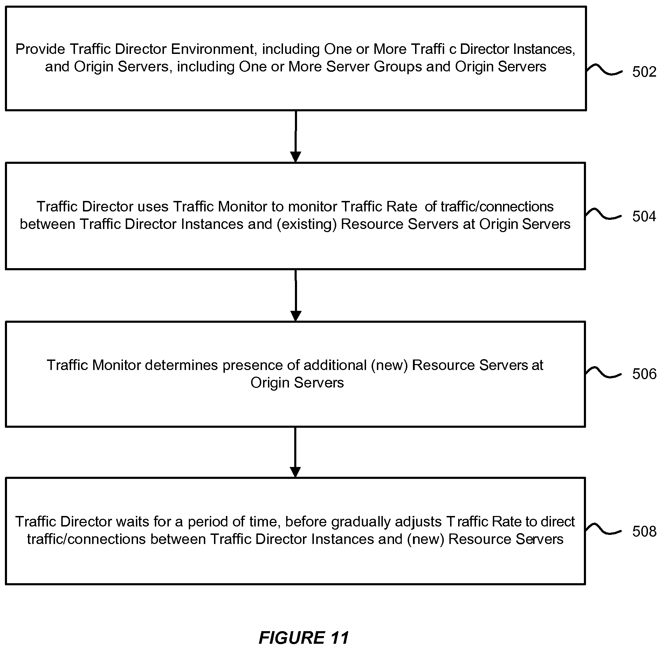

**Figure 11** is a flowchart of a method for providing rate acceleration in a traffic director, in accordance with an embodiment. As shown in Figure 11, at step 502, a traffic director environment is again provided, including a traffic director having one or more traffic director instances, and origin servers having one or more pools of servers. At step 504, using information from a traffic monitor, the traffic director can set a traffic rate which initially controls the traffic, including the number of connections, between the traffic director instances and one or more (existing) resource servers within the origin servers. At step 506, the traffic monitor can determine the presence of additional (new) resource servers within the origin servers, to which the traffic director can direct traffic. At step 508, the traffic director can wait for a period of time, before gradually shaping or adjusting the traffic rate, to direct traffic/connections between the traffic director instances and those new resource servers.

Although not illustrated in Figure 11, as described above, in accordance with an embodiment a similar technique can be use to monitor and gradually shape or adjust the traffic rate to decelerate traffic to an existing resource server, e.g., so that the server can be taken offline when its traffic is completely quiesced.

**Dynamic Discovery of Origin Servers**

In accordance with an embodiment, the traffic director makes it easy for an administrator to add origin servers to server pools, by dynamically discovering origin servers and detecting their server type and/or other properties.

For example, in accordance with an embodiment, when the administrator enables dynamic discovery, the traffic director can dynamically discover supported/recognized application servers within a server pool. From the perspective of the traffic server, knowing whether it is acting as a proxy (i.e., proxying) to a generic application server type, or alternatively a recognized server type such as a WebLogic server, is useful in that it helps the traffic director to apply server type-specific routing, throttling, and other optimizations. Such optimizations can be automatically applied by the system, without a need for further manual configuration by the administrator.

From the perspective of a client making requests to back-end origin servers, although those requests are routed somewhat transparently by the traffic server to the origin servers, the traffic director's ability to discover origin server types, and apply server-specific optimizations, provides performance advantages whenever recognized server types are used.

In accordance with an embodiment, if the administrator wants to create an origin-server pool that represents a cluster of recognized managed server types, e.g., WebLogic servers, they do not need to specify each managed server in that cluster as an origin server. Instead, it is sufficient to specify any one of the managed servers as an origin server in the pool. The traffic director can then dynamically discover the presence of other WebLogic server instances in the cluster, and distribute client requests both to the managed server that is configured as an origin server, and also to the dynamically discovered managed servers in the same cluster.

Similarly, when dynamic discovery is enabled, if any of the managed servers in the cluster is stopped, added, or removed, the administrator need not update the definition of the origin-server pool.

In accordance with an embodiment which uses WebLogic server, each Weblogic server instance includes its own reverse proxy module or plug-in, which can proxy incoming HTTP traffic to the back end application server, and can provide Weblogic-specific response headers in response to a health-check request. For example, a x-weblogic-jvmid response header can indicate a JVMID of the current WebLogic server node; a x-weblogic-cluster-hash response header can provide a hash value of WebLogic cluster nodes and as such indicate whenever a cluster is modified; and a x-weblogic-cluster-list response header can return a lists of JVMIDs corresponding to those Weblogic servers in a cluster.

When dynamic discovery is enabled for an origin-server pool in a WebLogic environment, the traffic director can discover remaining WebLogic origin servers in the pool as follows:

First, when a traffic director instance starts, it checks whether the origin servers specified in the pool are WebLogic managed servers, and whether the servers belong to a cluster, by sending an HTTP health-check request to each configured origin server. For any particular origin-server pool, the HTTP request type that the traffic director sends for dynamic discovery can be the health-check request type that is currently configured for that pool. The origin server's response will indicate whether that server is a WebLogic managed server, using response headers similar to those described above. If the origin server is a WebLogic managed server that belongs to a cluster, then the response will also include a list of the managed servers in the cluster.

In accordance with an embodiment, when the traffic director receives a response with x-weblogic-cluster-hash and x-weblogic-cluster-list response headers, the traffic director will first use the hash value response header to determine whether the cluster has been modified, and if so will parse the remaining response header, e.g.,

```
x-weblogic-cluster-list;JVMID\!dns/hex-ip\!port\!https-
port | JVMID\!dns/hex-ip\!port\!https-port
```

to determine the JVMIDs, ports, and additional information for the newly added WebLogic servers in the cluster, and then add these to the server pools.

Next, the traffic director uses the information in the response from the origin server to update its configuration with regard to the discovered managed servers. In accordance with an embodiment, the dynamically discovered origin servers inherit all of the properties, e.g. weight, or maximum connections, that are specified for the configured origin server.

Subsequently, at each periodic health-check interval configured for the origin-server pool, the traffic director attempts to detect changes in the cluster, by sending dynamic-discovery health-check requests to those WebLogic server instances that are configured as origin servers in the pool. If the response indicates a change in the cluster since the previous health check, such as removal or addition of a managed server, then the traffic director will update the configuration with the new set of dynamically discovered origin servers.

Although the above description uses WebLogic as an illustration, in accordance with other embodiments, a similar technique can be used to discover other types of supported/recognized origin servers within a server pool. Dynamically discovered origin servers are not stored permanently in the origin-server pool definition of the instance's configuration. As such, when a traffic director instance is restarted, the process of dynamic discovery by that instance starts afresh.

In accordance with an embodiment, the dynamic discovery feature is not enabled by default. An administrator can enable dynamic discovery by using either the administration console, or the command-line interface (CLI). When an origin-server pool is modified this is, in effect, modifying a configuration, so for any updated origin-server pool settings to take effect, the corresponding configuration should be redeployed.

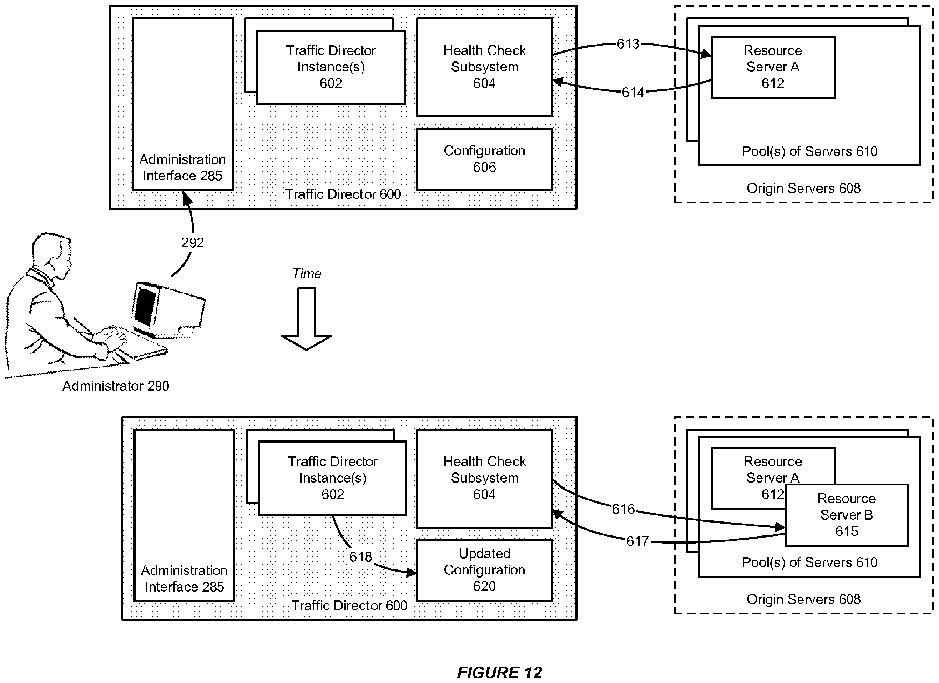

**Figure 12** illustrates dynamic discovery of origin servers in a traffic director, in accordance with an embodiment. As shown in Figure 12, an administrator 290 can interact 292 with and administer a traffic director 600 using an administration interface 285, which in turn includes one or more of an administration console (GUI) and/or a command line interface. The traffic director can include one or more traffic director instances 602, and can communicate requests to origin servers 608 having one or more pools of servers 610. Each pool of servers can include one or more (existing) resource servers, such as resource server A 612.

In accordance with an embodiment, the traffic director includes a health check subsystem 604, and a configuration 606, wherein the configuration provides information about various elements of the traffic director instances, such as listeners, origin servers, failover groups, and logs.

The configuration can be initially modified by the administrator, to indicate that a particular origin-server pool includes a particular resource server. At each periodic health-check interval configured for that origin-server pool, the health check subsystem then checks the health of each of its configured resource servers, for example by sending an HTTP health-check request 613, and receiving an appropriate response 614 from resource server A.

In accordance with an embodiment, when dynamic discovery is enabled, at each periodic health-check interval configured for the origin-server pool, the traffic director also attempts to detect changes in the pool, such as resource server B 615, by sending dynamic-discovery health-check requests 616 to any new server instances configured as origin servers within the pool, and receiving appropriate responses 617. Dynamically discovered servers are applied only with the server pool through which the node was discovered. The traffic director will then update 618 its configuration with this new set of dynamically discovered origin servers 620.

In accordance with an embodiment which uses WebLogic server instances, when dynamic discovery is enabled for an origin-server pool, the health check subsystem checks whether the origin servers specified in the pool are WebLogic managed servers, and whether the servers belong to a cluster. As described above, the origin server's response header can indicate whether that server is a WebLogic server managed server, and, if the origin server is a WebLogic managed server that belongs to a cluster, then the response will also include a list of the managed servers in the cluster.

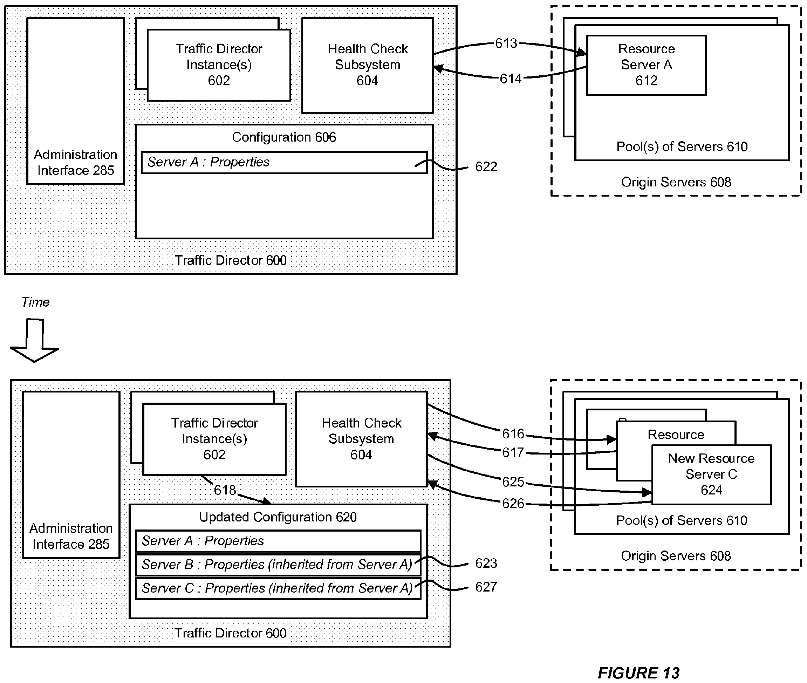

**Figure 13** further illustrates dynamic discovery of origin servers in a traffic director, in accordance with an embodiment. As described previously, when dynamic discovery is enabled, at each periodic health-check interval configured for an origin-server pool, the traffic director checks the health of each of its configured resource servers, and also attempts to detect changes in the pool by sending dynamic-discovery health-check requests to any new server instances, and updating its configuration with the new set of dynamically discovered origin servers.

As further shown in Figure 13, the configuration can include properties for each configured origin server in the pool, including in this example resource server A properties 622. In accordance with an embodiment, the dynamically discovered origin servers inherit all of the properties, e.g. weight, or maximum connections, that are specified for the configured origin server. For example, the traffic director can configure dynamically discovered resource server B as an origin server such that its properties 623 inherit (are the same as) those of configured resource server A.

Subsequently, if the traffic director detects further changes in the pool, such as new resource server C 624, through subsequent health checks 625, 626, the traffic director can similarly configure resource server C as an origin server such that its properties 627 also inherit (are the same as) those of configured resource server A.

In accordance with an embodiment, examples of the types of server properties that can be associated with a configured or discovered resource server include:

Weights: an origin server can be configured with different load weights - depending on the weights configured the traffic director will direct incoming request load to this server.
Rampup time: an origin server can be configured with a rampup time so that incoming request load is not instantly directed to the origin server.
Max connections: an origin server can be configured to support a maximum number of concurrent connections.
Backup: an origin server within a pool can be configured as a backup, in which case the traffic director will not route requests to that server unless all other servers in the pool which are not indicated as backups are marked offline,

In accordance with an embodiment which uses WebLogic, if the origin server's response indicates that the server is a WebLogic managed server and belongs to a cluster, then the response will also include a list of the managed servers in the cluster. The traffic director uses the information in the response from the origin server to update its configuration with the discovered managed servers. For example, if a particular origin server pool has a configuration:

```
<server>
      <origin-sever-pool>
      <name>wls-cluster</name>
      <type>http</type>
            <origin-server>
            <host>nsapi.us.oracle.com</host>
            <port>7011</port>
            </origin-server>
      </origin-sever-pool>
</server>
                              Listing 3
```

then, if the traffic director discovers a Weblogic server node running at 'nsapi.us.oracle.com:7012' it will configure that origin server with the same (i.e., inherited) properties as that of 'nsapi.us.oracle.com:7011'.

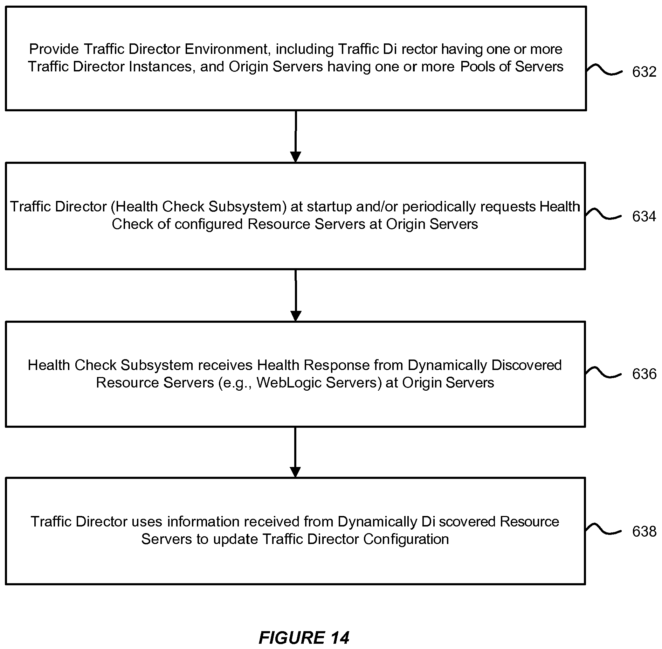

**Figure 14** is a flowchart of a method for providing dynamic discovery of origin servers in a traffic director, in accordance with an embodiment. As shown in Figure 14, at step 632, a traffic director environment is provided, including a traffic director having one or more traffic director instances, and origin servers having one or more pools of servers. At step 634, the traffic director (in accordance with an embodiment, a health check subsystem thereof) at startup and/or periodically requests a health check of those resource servers within the origin servers that have been previously configured by the administrator. At step 636, the traffic director's health check subsystem receives health responses from one or more dynamically discovered resource servers (e.g., WebLogic servers) at the origin servers. At step 638, the traffic director uses the information received from the dynamically discovered resource servers to update the traffic director configuration, including inheriting properties from previously configured origin servers where appropriate.

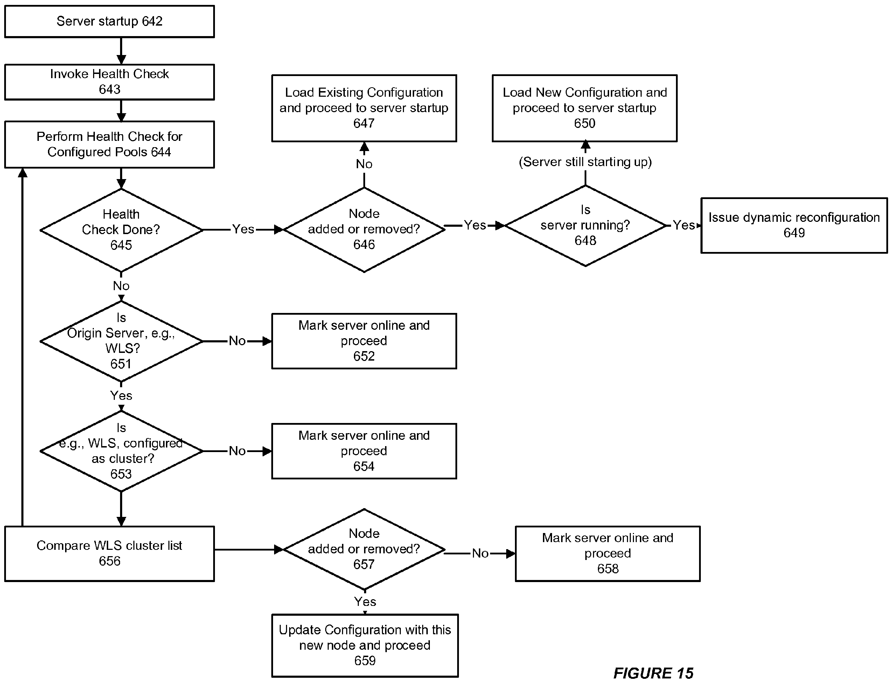

**Figure 15** is a flowchart of another method for providing dynamic discovery of origin servers in a traffic director, in accordance with an embodiment. In particular, Figure 15 illustrates an embodiment which uses WebLogic server such that, when dynamic discovery is enabled for an origin-server pool, the traffic director can discover new or additional WebLogic origin servers in the pool.

As shown in Figure 15, at step 642, the traffic server starts and invokes the health check subsystem (step 643) to perform a health check on configured pools (step 644).

At step 645, if the health check has completed, the system can proceed to either load an existing configuration (steps 646, 647), load a new configuration (steps 648, 650), or perform dynamic reconfiguration (step 649).

At step 651, if the origin server is a WebLogic server, and is configured as a cluster (step 653), the process compares the cluster list (step 656), and updates the configuration with new nodes where appropriate (steps 657, 659). Otherwise, the servers can be marked online and the process can proceed (steps 652, 654, 658).

In accordance with an embodiment, to dynamic discovery routing for use with the traffic director, an element called "dynamic-server-discovery" can be specified for that server, examples of which are provided in Table 3.

Table 3

| Element | Occurrences | Description | Value |
|---|---|---|---|
| Dynamic-server discovery | 0 or 1 | Enable dynamic server discover for, e.g. Weblogic cluster nodes | True or False. By default, True. |

**Configuring Load Balancing with a High-Performance Computing Environment**

In accordance with an embodiment, when used as a local load balancer for a high-performance computing environment, such as an Exalogic middleware machine having a high-speed InfiniBand network infrastructure, the traffic director's load balancing can be designed to work seamlessly with the environment's network architecture.

InfiniBand is a switched-fabric communications link offering point-to-point bidirectional serial links, and is generally designed for the connection of processors with high-speed peripherals such as disks. Different protocols can be used to communicate over the InfiniBand fabric, examples of which include the Internet Protocol over InfiniBand (IPoIB), and the Sockets Direct Protocol (SDP).

The IPoIB protocol is used as an interface on top of the InfiniBand layer, and allows socket-based applications to utilize the host's TCP/IP protocol stack, which is then translated into native InfiniBand in a manner transparent to the application. The SDP protocol is an optimization of the sockets-based interface, and allows the system to bypass the TCP/IP stack and instead translate socket-based packets directly into the InfiniBand layer using remote direct memory access (RDMA) operations while maintaining existing TCP stream socket semantics. The SDP protocol has the advantage of bypassing the several software layers that are necessary to support IPoIB, which in turn results in SDP having better latency and throughput than IPoIB.

In accordance with an embodiment, the traffic director can terminate inbound, e.g., Ethernet traffic emulated over IB (EoIB), as inbound connections, and can communicate with origin servers over the InfiniBand network, using a protocol such as IPoIB or SDP, as outbound connections. The traffic director's integrated HTTP caching and compression capability makes it particularly suitable for the variable egress and ingress bandwidth requirements of high-performance computing environments such as Exalogic.

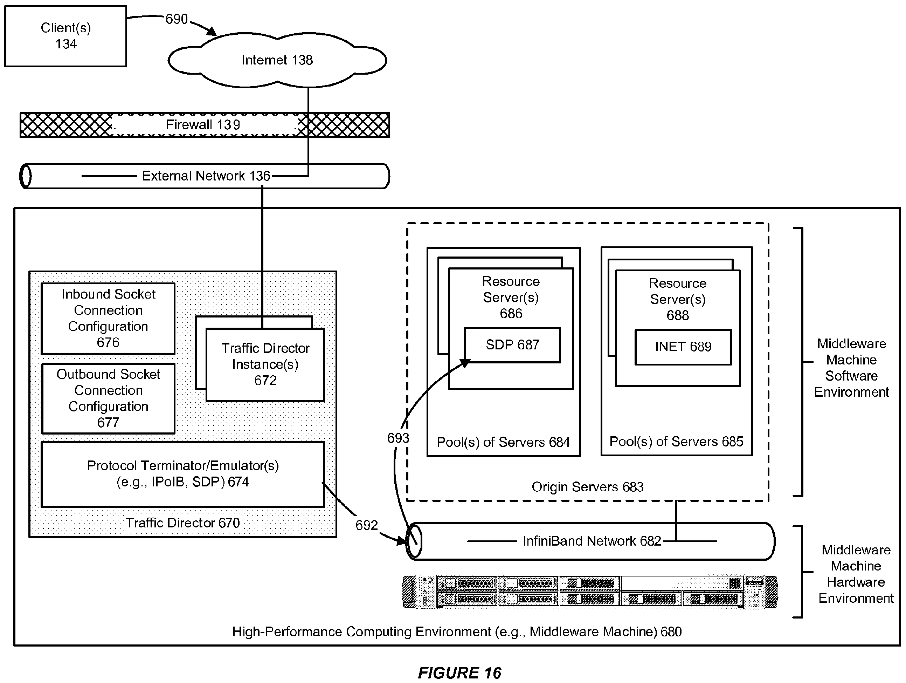

**Figure 16** illustrates the use of a traffic director, in accordance with an embodiment. As shown in Figure 16, a traffic director 670, having one or more traffic director instances 672, can be used in combination with a high-performance computing environment, such as a middleware machine (e.g., Exalogic) 680, having a high-speed InfiniBand network infrastructure 682.

In accordance with an embodiment, the traffic director includes one or more protocol terminator/emulators 674 (for example, one or more IPoIB and/or SDP terminator/emulators), an inbound socket configuration 676, and an outbound socket configuration 677. The origin servers 683 can be provided as one or more pools of servers 684, 685, wherein each server pool includes one or more resource servers 686, 688. Depending on the particular needs of the organization, each pool of servers can be configured to use a communications protocol/socket, such as a traditional Inet socket, or alternatively a high-speed protocol such as IPoIB or SDP, by which those origin servers within that pool will receive requests from the traffic director. In the example illustrated in Figure 16, the origin servers in server pool 684 are configured to use SDP 687, while the origin servers in server pool 685 are configured to use Inet 689. In accordance with other embodiments and examples, other types of protocol/socket can be used.

When a request 690 is received, directed to a particular origin server, the traffic director uses its configuration to determine an appropriate terminator/emulator, and communicate the request 692 to the high-speed InfiniBand network infrastructure, for communication to the origin server over its configured protocol/socket 693.

In accordance with an embodiment, to configure inbound connections, a http listener configuration can provided in a server.xml file, parameters and examples of which are provided in Table 4, and Listing 4 respectively.

Table 4

| Element | Occurrences | Description | Value |
|---------|-------------|-------------|-------|
| Family | 0 or 1 | Protocol family | default, inet, inet6, inet-sdp |

```
<server>
    <http-listener>
    <name>http-listener-a</name>
    <port>7777</port>
    <family>inet-sdp</family>
    <server-name>denali.oracle.com</server-name>
    <default-virtual-server-name>virtual-server-1</default-
virtual-server-name>
    </http-listener>
    ...
    <virtual-server>
    <name>virtual-server-1</name>
    <host>denali.oracle.com</host>
    <http-listener-name>http-listener-1</ http-listener-name>
    <object-file>virtual-server-1-obj.conf</object-file>
    </virtual-server>
</server>
                        Listing 4
```

In accordance with an embodiment, to configure outbound connections, a http protocol configuration can provided in a server.xml file, parameters and examples of which are provided in Table 5, and Listing 5 respectively. Under a reverse-proxy element a list of server pools can be provided, each of which is a definition of a pool of origin servers. Each server pool in turn can contain multiple origin server elements. A family element indicates the socket family used to connect to the origin server. In accordance with an embodiment, possible values include, e.g., a default, Inet, Inet 6, or inet-SDP socket.

Table 5

| Element | Occurrences | Description | Value |
|---|---|---|---|
| Family | 0 or 1 | Protocol family | default, inet, inet6, inet-sdp |

```
<server>
<reverse-proxy>

<server-pool>
<name>myserverpool1</name>

<origin-server>
        <host>server1</host>
        <port>80</port>
        <protocol>http</protocol>
        <family>inet-sdp</family>
        <capacity>5</capacity>
        </origin-server>

<origin-server>
        <host>server2</host>
        <port>80</port>
        <protocol>http</protocol>
        <family>inet-6</family>
        <capacity>10</capacity>
        </origin-server>
        </server-pool>

<server-pool>
<name>myserverpool2</name>
<algorithm>weighted-round-robin</algorithm>

<origin-server>
        <host>server3</host>
        <port>80</port>
        <protocol>http</protocol>
        <family>inet</family>
        <capacity>5</capacity>
        </origin-server>

<origin-server>
        <host>server4</host>
        <port>80</port>
        <protocol>http</protocol>
        <family>inet</family>
        <capacity>10</capacity>
        </origin-server>
        </server-pool>
</server>
```

                            Listing 5

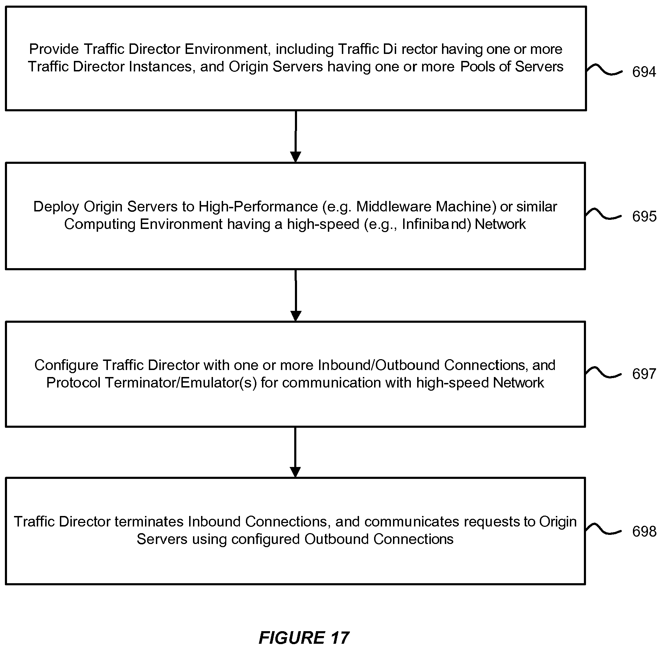

**Figure 17** is a flowchart of a method for using a traffic director, in accordance with an embodiment. As shown in Figure 17, at step 694, a traffic director environment is provided, including a traffic director having one or more traffic director instances, and origin servers having one or more pools of servers. At step 695, one or more origin servers are deployed to a high-performance computing environment, such as a middleware machine (e.g., Exalogic), having a high-speed (e.g., InfiniBand) network. At step 697, the traffic director is configured with one or more inbound and outbound connections, and protocol terminator/emulators, for communication with the high-speed network. At step 698, the traffic director terminates inbound (e.g., EoIB) connections, and communicates requests from clients to the origin servers using the configured outbound connections, and terminators/emulators.

**Dynamic Cache Data Decompression**

In accordance with an embodiment, the traffic director can be configured to respond to requests from clients by serving content from origin servers either as compressed data, or by dynamically decompressing the data before serving it, should a particular client prefer to receive a non-compressed variant of the data.

In accordance with an embodiment, the determination as to whether to serve data in either its compressed, or decompressed format, can be provided in the initial client request, e.g., through the use of HTTP headers, which provides flexibility and interoperability. The compression and decompression of such data can be configured to work together with the traffic director's built-in HTTP caching functionality.

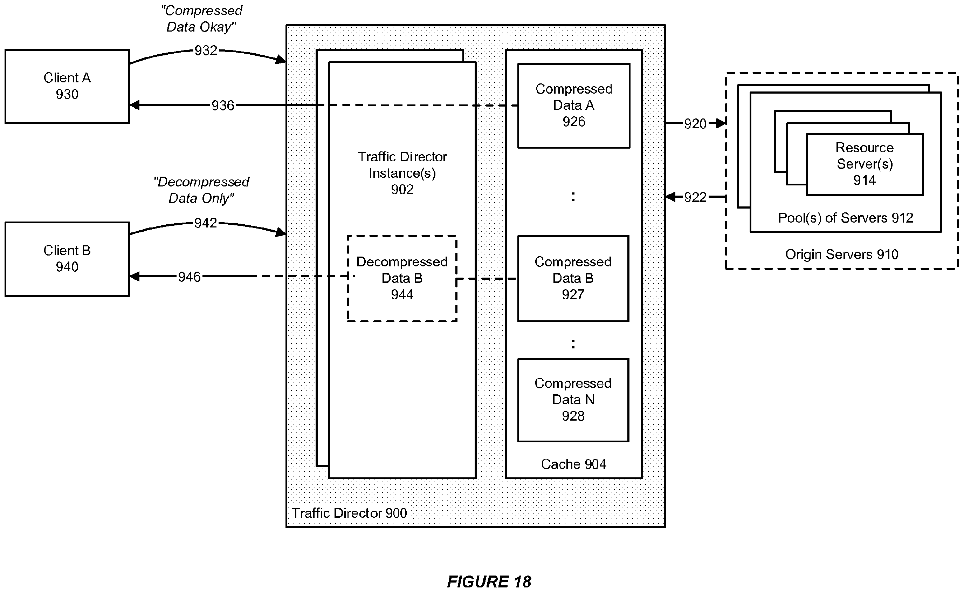

**Figure 18** illustrates the use of dynamic HTTP decompression in a traffic director environment, in accordance with an embodiment. As shown in Figure 18, in accordance with an embodiment, the traffic director 900 can include one or more traffic director instances 902, for distributing client requests to origin servers 910, including one or more pools 912 of resource servers 914.

In accordance with an embodiment, the traffic director includes a cache 904, which can be enabled for use with one or more of the origin servers. Although shown in Figure 18 as a single cache which is shared by several traffic director instances, in accordance with an embodiment several such caches can be used, and/or each traffic director instance can have its own cache.

In accordance with an embodiment, when caching is enabled, as client requests are communicated 920 to the origin servers, and content is returned 922 from those origin servers in response to the requests, the traffic director can cache one or more sets of data corresponding to origin server content, within its cache, according to its configuration. As an illustrative example, a particular origin server may be configured to serve image files (e.g. GIF files) and other content to clients, and the traffic director may be configured to cache the image files received from that particular origin server within its cache, for a particular period of time.

In accordance with an embodiment, the traffic director operates as an in-memory database, which means that caching data requires use of computer memory, and which in turn affects both system cost and performance. To address this, in accordance with an embodiment, the traffic director can compress the data to be stored in its cache, prior to caching the compressed data 926, 927, 928. This reduces the overall cache size required, and hence memory requirements and/or allows a greater number of data entries to be stored within a particular cache size.

In accordance with an embodiment, the cached data can then be provided to a client in response to a request from the client, either in its compressed format, or in a decompressed format, depending on the needs of the client.

For example, while some (e.g., browser) clients can accept compressed data within a response, other clients (e.g., mobile phones) may require response data to be provided in anon-compressed format.

As shown in Figure 18, in accordance with an embodiment, a client A 930 can indicate to the traffic director that a response can include compressed data 932. In accordance with an embodiment, this indication can be communicated by the client to the traffic director as part of a request component (e.g., in the case of HTTP traffic, a HTTP request header). In response, the traffic director can either communicate the request to the origin server to obtain a response, or, if the traffic director determines that a copy of the data is currently stored within its cache, in a compressed format (e.g., compressed data A 926), it can return 936 that data, in the compressed format, to the client.

As further shown in Figure 18, In accordance with an embodiment, a client B 940 can indicate to the traffic director that a response cannot include compressed data (i.e., that only non-compressed data is acceptable) 942. In accordance with an embodiment, this indication can be similarly communicated by the client to the traffic director as part of a request component, e.g., a HTTP request header. In response, the traffic director can again either communicate the request to the origin server to obtain a response, or, if the traffic director determines that a copy of the data is currently stored within its cache in a compressed format (e.g., compressed data B 927), decompress that data 944, and return the decompressed variant 946 of the data to the client.

Although illustrated in Figure 18 as affirmative indications from a client, e.g., through the use of HTTP request headers, in accordance with an embodiment the system can also recognize defaults, e.g., that by default only non-compressed data should be considered acceptable to a client, unless a client indicates otherwise, and operate accordingly.

Using the above functionality, the cache need not store the data in two different (e.g., compressed versus non-compressed) formats, to suit the needs of different clients, but instead only a single compressed data instance/format need be stored within the cache, and the data decompressed as needed depending on the needs of the particular client making the request.

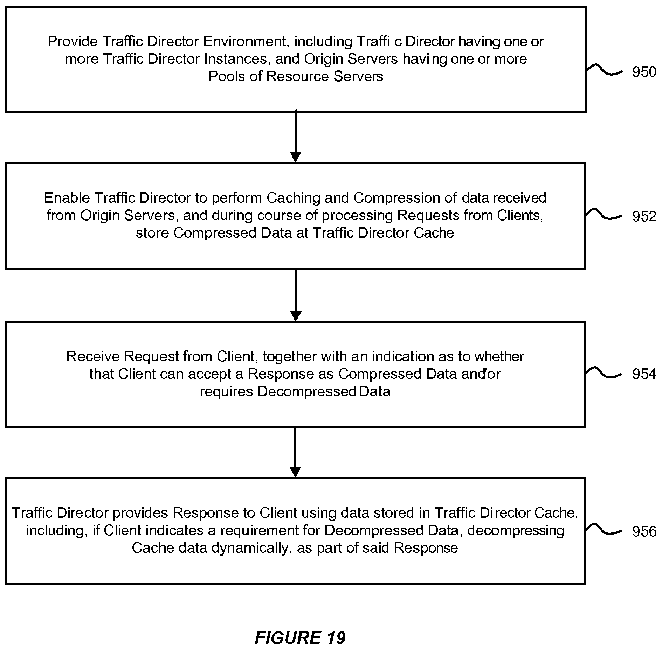

**Figure 19** is a flowchart of a method for providing dynamic HTTP decompression in a traffic director environment, in accordance with an embodiment. As shown in Figure 19, at step 950, a traffic director environment is provided, including a traffic director having one or more traffic director instances, and origin servers having one or more pools of resource servers. At step 952, the traffic director is enabled to perform caching and compression of content or data received from the origin servers, and during the course of processing requests from clients, store one or more compressed data at the traffic director's cache. At step 954, the traffic director can receive a request from a client, for a particular content or data, together with an indication as to whether that client can accept a response as compressed data and/or requires decompressed data. At step 956, if the requested content is in the cache, the traffic director can provide a response to the client using the data stored in the cache, including, if the client indicates a requirement for decompressed data, then decompressing the cache's data dynamically, as part of preparing the response.

**Support for Hardware-Assisted Compression Primitives**

In accordance with an embodiment, the traffic director can be configured to make use of hardware-assisted compression primitives, for example Intel's Integrated Performance Primitives (IPP), to further improve the performance of its data compression and decompression, including the HTTP caching and dynamic decompression features described above.

In accordance with an embodiment, a computer hardware, such as a processor, can be associated with a compression/decompression library, which in turn can be used to improve the performance of compression and decompression operations on certain processors. For example, some computer hardware manufactures provide a zlib library for use with their product (e.g., Intel provide its IPP library, which can be preloaded into the system during startup. In accordance with an embodiment, if a compression/decompression library is made available, the traffic director can make use of the library to improve performance of its compression and decompression operations.

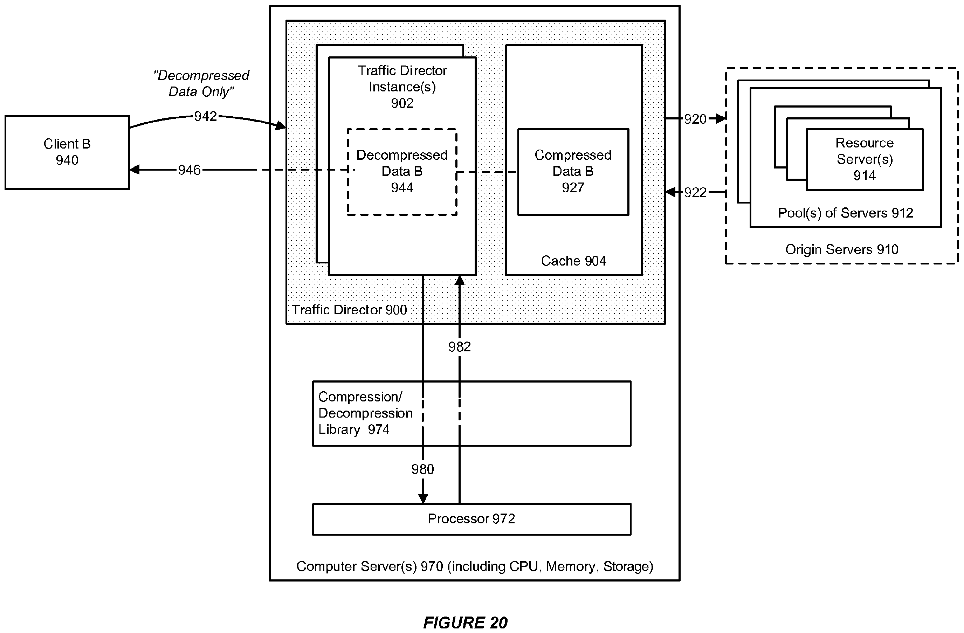

**Figure 20** illustrates support for hardware primitives, for use with dynamic HTTP decompression in a traffic director environment, in accordance with an embodiment. As shown in Figure 20, in accordance with an embodiment, the traffic director can be provided on a computer server 970 that includes a processor 972. In accordance with an embodiment, the system comprises a compression/decompression library 974 (e.g., a zlib library). When the traffic director needs to compress or decompress content or data, for example in decompressing cache data in response to a client, it can utilize 980, 982 the compression/decompression library, to take advantage of hardware-assisted compression primitives provided by the processor.

The present invention may be conveniently implemented using one or more conventional general purpose or specialized digital computer, computing device, machine, or microprocessor, including one or more processors, memory and/or computer readable storage media programmed according to the teachings of the present disclosure. Appropriate software coding can readily be prepared by skilled programmers based on the teachings of the present disclosure, as will be apparent to those skilled in the software art.

In some embodiments, the present invention includes a computer program product which is a non-transitory storage medium or computer readable medium (media) having instructions stored thereon/in which can be used to program a computer to perform any of the processes of the present invention. The storage medium can include, but is not limited to, any type of disk including floppy disks, optical discs, DVD, CD-ROMs, microdrive, and magnetooptical disks, ROMs, RAMs, EPROMs, EEPROMs, DRAMs, VRAMs, flash memory devices, magnetic or optical cards, nanosystems (including molecular memory ICs), or any type of media or device suitable for storing instructions and/or data.

The foregoing description of the present invention has been provided for the purposes of illustration and description. It is not intended to be exhaustive or to limit the invention to the precise forms disclosed. Although some of the described embodiments describe features in the context of an Oracle Traffic Director environment, the described features can also be used in the context of other computing environments. Many modifications and variations will be apparent to the practitioner skilled in the art. The embodiments were chosen and described in order to best explain the principles of the invention and its practical application, thereby enabling others skilled in the art to understand the invention for various embodiments and with various modifications that are suited to the particular use contemplated. It is intended that the scope of the invention be defined by the following claims and their equivalence.

**Claims**

1. A system for use in a computing environment which includes a traffic director component, (100) comprising:

  a traffic director having one or more traffic director instances, (102,104) which is configured to receive and communicate requests, from clients, to origin servers having one or more pools of servers;
  a pool of origin servers, (110) which is configured so that more than one of the servers within the pool are assigned as primary (350) and more than one of the other servers within the pool are assigned as backup servers, wherein each of the origin servers in the pool is associated with a configuration identifying that server as either a primary server or a backup server; and
  wherein the traffic director is configured so that it determines the availability of the primary servers in the pool, and directs requests only to the primary servers in the pool while at least one primary server in the pool is available; wherein the traffic director is further configured so that if no primary server is available, then the traffic director will direct requests to the backup servers in the particular pool until at least one primary server becomes available again; and wherein the traffic director is further configured so that once any primary server becomes available again, the traffic director will stop sending requests to the backup servers and will route subsequent requests only to the primary server again.

2. The system of claim 1, wherein the origin servers have a plurality of pools of servers, and wherein each of the pools can include one or more of its servers assigned as primary servers, and one or more others of its servers assigned as backup servers.

3. A method for use in a computing environment which includes a traffic director component, (100) comprising the steps of:

providing a traffic director having one or more traffic director instances, (102,104) which is configured to receive and communicate requests, from clients, to origin servers having one or more pools of servers; providing a pool of origin servers, (110) which is configured so that more than one of the servers within the pool are assigned as primary servers, (350) and more than one of the other servers within the pool are assigned as backup servers, (356) wherein each of the origin servers in the pool is associated with a configuration identifying that server as either a primary server or a backup server; and wherein the traffic director is configured so that it determines the availability of the primary servers in the pool, and directs requests only to the primary servers in the pool while at least one primary server in the pool is available; wherein the traffic director is further configured so that if no primary server is available then the traffic director will direct requests to the backup servers in the particular pool until at least one primary server becomes available again; and wherein the traffic director is further configured so that once any primary server becomes available again, the traffic director will stop sending requests to the backup servers and will route subsequent requests only to the primary server again.

4. The method of claim 3, wherein the origin servers have a plurality of pools of servers, and wherein each of the pools can include one or more of its servers assigned as primary servers, and one or more others of its servers assigned as backup servers.

5. A non-transitory computer readable medium, including instructions stored thereon which when read and executed by one or more computers cause the one or more computers to perform all the steps of the method of claim 3 to 4.

**Patentansprüche**

1. System zur Verwendung in einer Rechenumgebung, die eine Verkehrsleitkomponente (100) enthält, das Folgendes umfasst:

eine Verkehrsleiteinrichtung, die eine oder mehrere Verkehrsleitinstanzen (102, 104) besitzt und konfiguriert ist, Anforderungen von Clients zu empfangen und zu Ausgangs-Servern, die einen oder mehrere Pools von Servern besitzen, zu kommunizieren; und einen Pool von Ausgangs-Servern (110), der derart konfiguriert ist, dass mehr als ein Server im Pool als primär (350) zugewiesen sind und mehr als einer der weiteren Server im Pool als Backup-Server zugewiesen sind, wobei jeder der Ausgangs-Server im Pool einer Konfiguration zugeordnet ist, die diesen Server als entweder einen primären Server oder einen Backup-Server identifiziert; wobei die Verkehrsleiteinrichtung derart konfiguriert ist, dass sie die Verfügbarkeit der primären Server im Pool bestimmt und Anforderungen lediglich zu den primären Servern im Pool leitet, während mindestens ein primärer Server im Pool verfügbar ist; wobei die Verkehrsleiteinrichtung ferner derart konfiguriert ist, dass dann, wenn kein primärer Server verfügbar ist, die Verkehrsleiteinrichtung Anforderungen zu den Backup-Servern im bestimmten Pool leitet, bis mindestens ein primärer Server wieder verfügbar ist; und die Verkehrsleiteinrichtung ferner derart konfiguriert ist, dass dann, wenn ein beliebiger primärer Server wieder verfügbar ist, die Verkehrsleiteinrichtung ein Senden von Anforderungen zu den Backup-Servern anhält und nachfolgende Anforderungen wieder lediglich zum primären Server leitet.

2. System nach Anspruch 1, wobei die Ausgangs-Server mehrere Pools von Servern besitzen und jeder der Pools einen oder mehrere seiner Server, die als primäre Server zugewiesen sind, und einen oder mehrere weitere seiner Server, die als Backup-Server zugewiesen sind, enthalten kann.

3. Verfahren zur Verwendung in einer Rechenumgebung, die eine Verkehrsleitkomponente (100) enthält, das die folgenden Schritte umfasst:

Bereitstellen einer Verkehrsleiteinrichtung, die eine oder mehrere Verkehrsleitinstanzen (102, 104) besitzt und konfiguriert ist, Anforderungen von Clients zu empfangen und zu Ausgangs-Servern, die einen oder mehrere Pools von Servern besitzen, zu kommunizieren; und

Bereitstellen eines Pools von Ausgangs-Servern (110), der derart konfiguriert ist, dass mehr als ein Server im Pool als primäre Server (350) zugewiesen sind und mehr als einer der weiteren Server im Pool als Backup-Server (356) zugewiesen sind, wobei jeder der Ausgangs-Server im Pool einer Konfiguration zugeordnet ist, die diesen Server als entweder einen primären Server oder einen Backup-Server identifiziert; wobei

die Verkehrsleiteinrichtung derart konfiguriert ist, dass sie die Verfügbarkeit der primären Server im Pool bestimmt und Anforderungen lediglich zu den primären Servern im Pool leitet, während mindestens ein primärer Server im Pool verfügbar ist;

die Verkehrsleiteinrichtung ferner derart konfiguriert ist, dass dann, wenn kein primärer Server verfügbar ist, die Verkehrsleiteinrichtung Anforderungen zu den Backup-Servern im bestimmten Pool leitet, bis mindestens ein primärer Server wieder verfügbar ist; und

die Verkehrsleiteinrichtung ferner derart konfiguriert ist, dass dann, wenn ein beliebiger primärer Server wieder verfügbar ist, die Verkehrsleiteinrichtung ein Senden von Anforderungen zu den Backup-Servern anhält und nachfolgende Anforderungen wieder lediglich zum primären Server leitet.

4. Verfahren nach Anspruch 3, wobei die Ausgangs-Server mehrere Pools von Servern besitzen und jeder der Pools einen oder mehrere seiner Server, die als primäre Server zugewiesen sind, und einen oder mehrere weitere seiner Server, die als Backup-Server zugewiesen sind, enthalten kann.

5. Nichttransitorisches, computerlesbares Medium, das Anweisungen enthält, die auf ihm gespeichert sind, die, wenn sie durch einen oder mehrere Computer gelesen und ausgeführt werden, bewirken, dass der eine oder die mehreren Computer alle Schritte des Verfahrens nach Anspruch 3 bis 4 durchführen.

## Revendications

1. Système destiné à être utilisé dans un environnement informatique qui comporte un composant de gestionnaire de trafic (Traffic Director) (100), comprenant :

un gestionnaire de trafic ayant une ou plusieurs instances de gestionnaire de trafic, (102, 104), qui sont configurées pour recevoir et communiquer des requêtes, émises à partir de clients, à des serveurs d'origine ayant un ou plusieurs pools de serveurs ;

un pool de serveurs d'origine, (110), qui est configuré de sorte que plusieurs serveurs à l'intérieur du pool sont affectés comme primaires (350) et que plusieurs autres serveurs à l'intérieur du pool sont affectés comme serveurs de secours, chacun des serveurs d'origine dans le pool étant associé à une configuration identifiant ce serveur comme un serveur primaire ou un serveur de secours ; et

le gestionnaire de trafic étant configuré pour déterminer la disponibilité des serveurs primaires dans le pool, et diriger des requêtes uniquement vers les serveurs primaires dans le pool si au moins un serveur primaire dans le pool est disponible ; le gestionnaire de trafic étant en outre configuré de façon à, si aucun serveur primaire n'est disponible, diriger alors des requêtes vers les serveurs de secours dans le pool particulier jusqu'à ce qu'au moins un serveur primaire devienne disponible à nouveau ; et le gestionnaire de trafic étant en outre configuré pour, une fois qu'un serveur primaire est devenu disponible à nouveau, arrêter l'envoi de requêtes aux serveurs de secours et router à nouveau des requêtes subséquentes uniquement vers le serveur primaire.

2. Système selon la revendication 1, dans lequel les serveurs d'origine ont une pluralité de pools de serveurs, et chacun des pools pouvant inclure un ou plusieurs de ses serveurs affectés comme serveurs primaires, et un ou plusieurs autres de ses serveurs affectés comme serveurs de secours.

3. Procédé destiné à être utilisé dans un environnement informatique qui comporte un composant de gestionnaire de trafic (Traffic Director) (100), comprenant les étapes suivantes :

fournir un gestionnaire de trafic ayant une ou plusieurs instances de gestionnaire de trafic, (102, 104), qui sont configurées pour recevoir et communiquer des requêtes, émises à partir de clients, à des serveurs d'origine ayant un ou plusieurs pools de serveurs ;

fournir un pool de serveurs d'origine, (110), qui est configuré de sorte que plusieurs serveurs à l'intérieur du pool sont affectés comme serveurs primaires (350) et que plusieurs autres serveurs à l'intérieur du pool sont affectés comme serveurs de secours (356), chacun des serveurs d'origine dans le pool étant associé à une configuration identifiant ce serveur comme un serveur primaire ou un serveur de secours ; et

le gestionnaire de trafic étant configuré pour déterminer la disponibilité des serveurs primaires dans le pool, et diriger des requêtes uniquement vers les serveurs primaires dans le pool si au moins un serveur primaire dans le pool est disponible ;

le gestionnaire de trafic étant en outre configuré pour, si aucun serveur primaire n'est disponible, diriger alors des requêtes vers les serveurs de secours dans le pool particulier jusqu'à ce qu'au moins un serveur primaire devienne à nouveau disponible ; et

le gestionnaire de trafic étant en outre configuré pour, une fois qu'un serveur primaire est devenu disponible à nouveau, arrêter l'envoi de requêtes aux serveurs de secours et router à nouveau des requêtes subséquentes uniquement vers le serveur primaire.

4. Procédé selon la revendication 3, dans lequel les serveurs d'origine ont une pluralité de pools de serveurs, et chacun des pools pouvant inclure un ou plusieurs de ses serveurs affectés comme serveurs primaires, et un ou plusieurs autres de ses serveurs affectés comme serveurs de secours.

5. Support non transitoire lisible par ordinateur, stockant des instructions qui, lorsqu'elles sont lues et exécutées par un ou plusieurs ordinateurs, amènent les un ou plusieurs ordinateurs à mettre en œuvre toutes les étapes du procédé des revendications 3 à 4.

**FIGURE 1**

**FIGURE 2**

**FIGURE 3**

EP 2 761 450 B1

**FIGURE 4**

Administrator 290

292

Traffic Director
Administration Console (GUI)
286

Traffic Director
Administration Command-Line Interface
288

Administration Interface 285

Administration Environment 284

296

294

Administration Node
(Traffic Director Instance)
282

Administration Node
(Traffic Director Instance)
281

Administration Server
(Traffic Director Instance)
280

Traffic Director 100

**FIGURE 5**

**FIGURE 6**

EP 2 761 450 B1

EP 2 761 450 B1

Provide Traffic Director Environment, including Traffic Di rector having one or more Traffic Director Instances, and Origin Servers having one or more Pools of Servers — 380

Assign or otherwise determine Pool having one or more Primary Servers, and one or more Backup Servers, in Active/Passive Configuration — 382

Determine availability of Primary Servers, and direct requests onl y to Primary Servers while Pool includes a sufficient number (>1) of availabl e Primary Servers — 384

If, and for duration of Pool having insufficient or no Primary Servers , direct requests to Backup Servers, until sufficient number of Primary Server s is available again — 386

*FIGURE 7*

FIGURE 8

FIGURE 9

Provide Traffic Director Environment, including Traffic Director having one or more Traffic Director Instances, and Origin Servers having one or more Pools of Servers — 490

Traffic Monitor at Traffic Director monitors traffic/connections be tween Traffic Director Instances and Resource Servers at Origin Servers — 492

If Traffic Monitor indicates traffic/connections excee ds Maximum Number of Connections, temporarily direct subsequent traffic/connections to Connection Queue — 494

Traffic Director provides Informational Message, and continues to monitor traffic/connections to Origin Servers for subsequent queuing adjustment — 496

*FIGURE 10*

Provide Traffic Director Environment, including One or More Traffi c Director Instances, and Origin Servers, including One or More Server Groups and Origin Servers

502

Traffic Director uses Traffic Monitor to monitor Traffic Rate of traffic/connections between Traffic Director Instances and (existing) Resource Servers at Origin Servers

504

Traffic Monitor determines presence of additional (new) Resource Servers at Origin Servers

506

Traffic Director waits for a period of time, before gradually adjusts T raffic Rate to direct traffic/connections between Traffic Director Instances and (new) Resource Servers

508

*FIGURE 11*

**FIGURE 12**

EP 2 761 450 B1

**Traffic Director 600**

Administration Interface 285

Traffic Director Instance(s) 602

Health Check Subsystem 604

613

614

Resource Server A 612

Pool(s) of Servers 610

Origin Servers 608

Configuration 606

Server A : Properties

622

*Time*

**Traffic Director 600**

Administration Interface 285

Traffic Director Instance(s) 602

Health Check Subsystem 604

618

616

617

625

626

Resource

New Resource Server C 624

Pool(s) of Servers 610

Origin Servers 608

Updated Configuration 620

Server A : Properties

Server B : Properties (inherited from Server A)

623

Server C : Properties (inherited from Server A)

627

*FIGURE 13*

Provide Traffic Director Environment, including Traffic Di rector having one or more
Traffic Director Instances, and Origin Servers having one or more Pools of Servers — 632

Traffic Director (Health Check Subsystem) at startup and/or periodically requests Health
Check of configured Resource Servers at Origin Servers — 634

Health Check Subsystem receives Health Response from Dynamically Discovered
Resource Servers (e.g., WebLogic Servers) at Origin Servers — 636

Traffic Director uses information received from Dynamically Di scovered Resource
Servers to update Traffic Director Configuration — 638

*FIGURE 14*

**FIGURE 15**

*FIGURE 16*

Provide Traffic Director Environment, including Traffic Di rector having one or more
Traffic Director Instances, and Origin Servers having one or more Pools of Servers                    694

Deploy Origin Servers to High-Performance (e.g. Middleware Machine) or similar
Computing Environment having a high-speed (e.g., Infiniband) Network                                  695

Configure Traffic Director with one or more Inbound/Outbound Connections, and
Protocol Terminator/Emulator(s) for communication with high-speed Network                            697

Traffic Director terminates Inbound Connections, and communicates requests to Origin
Servers using configured Outbound Connections                                                         698

**FIGURE 17**

FIGURE 18

Provide Traffic Director Environment, including Traffi c Director having one or more Traffic Director Instances, and Origin Servers havi ng one or more Pools of Resource Servers

950

Enable Traffic Director to perform Caching and Compression of data received from Origin Servers, and during course of processing Requests from Clients, store Compressed Data at Traffic Director Cache

952

Receive Request from Client, together with an indication as to whether that Client can accept a Response as Compressed Data and/or requires Decompressed Data

954

Traffic Director provides Response to Client using data stored in Traffic Di rector Cache, including, if Client indicates a requirement for Decompressed Data, decompressing Cache data dynamically, as part of said Response

956

*FIGURE 19*

**FIGURE 20**

EP 2 761 450 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61539886
- US 61539900
- US 60108712
- US 60142812
- US 60153012
- US 60163212
- US 62571612
- US 20070174660 A1
- US 20070226359 A1